(19) Europäisches Patentamt
European Patent Office
Office européen des brevets

(11) **EP 2 232 408 B1**

## (12) EUROPÄISCHE PATENTSCHRIFT

(45) Veröffentlichungstag und Bekanntmachung des Hinweises auf die Patenterteilung:
**06.07.2011 Patentblatt 2011/27**

(51) Int Cl.:
**G06K 17/00** *(2006.01)* **G03B 21/11** *(2006.01)*
**H04N 1/00** *(2006.01)*

(21) Anmeldenummer: **09702919.3**

(22) Anmeldetag: **08.01.2009**

(86) Internationale Anmeldenummer:
**PCT/EP2009/050159**

(87) Internationale Veröffentlichungsnummer:
**WO 2009/090134 (23.07.2009 Gazette 2009/30)**

(54) **VERFAHREN UND GERÄT FÜR DEN ZUGRIFF AUF MIKROFORMEN**

METHOD AND DEVICE FOR ACCESSING MICROFORMS

PROCÉDÉ ET APPAREIL POUR L'ACCÈS À DES MICROFORMES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **14.01.2008 DE 102008004403**
**05.05.2008 DE 102008022162**

(43) Veröffentlichungstag der Anmeldung:
**29.09.2010 Patentblatt 2010/39**

(73) Patentinhaber: **Cybercity GmbH**
**56651 Oberdürenbach (DE)**

(72) Erfinder: **LANGNER, Klaus, Dr.**
**56651 Oberdürenbach (DE)**

(74) Vertreter: **Kohlmann, Kai**
**Donatusstraße 1**
**52078 Aachen (DE)**

(56) Entgegenhaltungen:
**WO-A-00/28726 WO-A-01/61626**
**US-A1- 2007 103 739**

**Beschreibung**

Die Erfindung betrifft ein Verfahren zumindest zum Lesen von auf einer Mikroform in Feldern gespeicherten analogen und/oder digitalen Daten mit einem Gerät für den Zugriff auf die Mikroform, das über eine Hardwareschnittstelle mit einer Datenverarbeitungsanlage verbunden wird. Außerdem betrifft die Erfindung ein Gerät zur Durchführung des Verfahrens sowie eine Mikroform.

Mikroformen (Mikrofilm, Mikrofiche und Filmkarte) werden seit 1920 zur Archivierung von Dokumenten benutzt. Allein die Zahl weltweit existierender Mikrofiches wird auf einige Billionen geschätzt. Dementsprechend ist auch eine breite Palette von Lesegeräten auf dem Markt. Diese zeichnen sich dadurch aus, dass die auf Mikroform gespeicherten Inhalte dem Betrachter entweder direkt auf einer Mattscheibe dargestellt oder mit Hilfe elektronischer Verfahren abgetastet und mit Digitalisierungsvorrichtungen sichtbar gemacht werden.

Bislang werden auf Mikroformen überwiegend fotografische Abbilder von Bild- und/oder Textdokumenten gespeichert. Herkömmliche Mikrofiches zur Speicherung analoger Daten sind zumeist nach dem in DIN ISO 9923 beschriebenen Verfahren ausgeführt. Dabei wird der 105 mm x 148 mm große Mikrofiche in zwei Bereiche aufgeteilt. Der erste Bereich ist für ein für Mensch und/oder Maschine lesbares Titelfeld reserviert. Der zweite Bereich wird in eine unterschiedliche Anzahl Felder aufgeteilt, die jeweils eine verkleinerte Repräsentation eines beliebigen Dokumentes in Graustufen (analoge Daten) enthalten. Die Zahl der Felder beträgt, je nach Aufteilung, zwischen 1 und 420:

**Tabelle 1: Aufteilung eines Mikrofiche nach DIN ISO 9923**

| Anzahl der Bildfelder | ßildgröße[1] | Maße des Bildfelder[2] | Anzahl der Reihen | Anzahl der Spalten | Maximale Titelfedbreite | Unterer Rand | Linker Rand | Bild-Nr |
|---|---|---|---|---|---|---|---|---|
| 49 | 87,5 x 140 | 12,5 x 20 | 7 | 7 | 12,25 | 4±0,5 | 4 ±0.5 | 3 |
| 98 | 87,5 x 140 | 10 x 12,5 | 7 | 14 | 12,25 | 4±0.5 | 4 ±0,5 | 3 |
| 270 | 90,75 x 139,5 | 6,25 x 7.75 | 15 | 18 | 6 | ±0,5 | 4 ±0,5 | 4 |
| 420 | 93,75 x 140 | 5 x 625 | 15 | 28 | 6 | ±0,5 | 4 ±0,5 | 5 |
| 1 | 95 x133 | 95 x 133 | - | - | 8,25 | $0,5 \, {}^{+0,2}_{0}$ | 7,5 ±0,25 | 6 |
| [1] Die Bildgröße schließt nicht das Titelfeld mit ein. | | | | | | | | |
| [2] Auf dem gleichen Mikroplanfilm dürfen Einzelfelder und Doppelfelder verwendet werden. | | | | | | | | |

In der EP 1 684 199 A2 ist ein Verfahren zur Digitalisierung und Anzeige von auf Mikrofiche gespeicherten analogen Daten offenbart, bei dem die digitalisierten Daten einer Texterkennungs-Software zugeführt werden. Die im Wege der Texterkennung erzeugten digitalen Daten werden in einer Datenverarbeitungsanlage weiterverarbeitet.

Die DE 40 00 671 A1 offenbart den Einsatz von Mikrofilmen als Speichermedium für Daten. Die Daten sind auf dem Mikrofilm analog als alphanumerische Zeichen gespeichert. Der Mikrofilm wird in einen Computer Input-Mikrofilmreader (Lesegerät) eingelegt, der den Mikrofilm abtastet und die auf dem Mikrofilm gespeicherten Zeichen in Computerdaten umwandelt. Für die Umwandlung wird auch hier eine Texterkennungssoftware verwendet. Die Texterkennung liefert Computercodes, die den Zeichen entsprechen, die sich auf dem Mikrofilm befinden. Diese Computercodes werden von dem Lesegerät über eine Computerschnittstelle an eine Datenverarbeitungsanlage übertragen.

Die US 4,213,040 A beschreibt einen Mikrofiche, auf dem digitale oder analoge Daten gespeichert sind, die von einem Scanner gelesen und über eine Schnittstelle an elektronische Schaltkreise ausgegeben werden, die die digitalen oder analogen Daten verarbeiten. Die digitalen Daten sind zeilenweise über die Länge der Mikrofiche-Karte angeordnet. Oberhalb und unterhalb des Datenbereichs befindet sich je ein inkrementaler Code, der mit Hilfe eines Scanners und einer logischen Schaltung ausgewertet wird. Sofern die Bits der inkrementalen oberen und unteren Codes nicht Bit für Bit übereinstimmen, wird der Sensor mittels der logischen Schaltung ausgerichtet, so dass die zeilenweise angeordneten Daten korrekt ausgelesen werden können. Ferner besitzt der Mikrofiche oberhalb und unterhalb des Datenbereichs einen horizontal verlaufenden Balken, der den Beginn bzw. das Ende der Daten kennzeichnet. In den Bereichen oberhalb und unterhalb des Datenbereiches befinden sich darüber hinaus Zentriermarkierungen, die zu den in Reihen und Spaltenangeordneten Daten ausgerichtet sind und eine Adressierung der Daten erlauben, die innerhalb des Datenbereichs stets in ihrer Gesamtheit ausgelesen werden.

Die US 2007/103739 A1, die als nächster Stand der Technik gegenüber dem Gegenstand aus Anspruch 1 und Anspruch 5 gesehen wird, offenbart Anordnungen und Verfahren zum Lesen von auf einer Mikroform gespeicherten analogen Daten mit einem Mikrofilm-Scanner, der eine erste Mikrofilmspule aufweist, von der der Mikrofilm über einen Scan-Bereich zu einer Aufnahmespule geführt wird. Oberhalb des Scan-Bereichs befindet sich eine Digitalkamera, die Bilder von dem Mikrofilm aufnimmt. Der Nutzer des Mikrofilm-Scanners kann den Mikrofilm von Bild zu Bild bewegen, in dem er auf einen entsprechenden Knopf in einem Bedienfeld des Mikrofilm-Scanners drückt. Das Video-Signal der Digitalkamera wird über einen Verbinder an eine Datenverarbeitungsanlage mit einem Bildschirm übertragen. Um den Mikrofilm-Scanner auch von einem entfernten Ort bedienen zu können, kann die Datenverarbeitungsanlage am Aufstellungsort des Mikrofilm-Scanners über ein Datenübertragungsgerät an ein Netzwerk, insbesondere das Internet angeschlossen werden. Zumindest die Grundfunktionen des Mikrofilm-Scanners sind von einem entfernt aufgestellten Computer eines Nutzers dann fernsteuerbar. Zu diesen Grundfunktionen gehören die Funktionen für den Bildvorschub des Mikrofilms sowie zum Rückspulen des Mikrofilms auf die Spule.

Die WO 00/28726 A D2 offenbart in Abgrenzung zu Mikroformen aus Anpruch 8, ein Langzeitspeichermedium, das insbesondere von einem optisch beschreibbaren Band gebildet wird. Alternativ wird eine optisch beschreibbare Scheibe offenbart. Auf dem Band können in ein und derselben Spur sowohl sichtbare (analoge) als auch digitale Einträge aufgezeichnet werden.

Ein Hauptnachteil der bekannten Verfahren und Geräte für den Zugriff auf die Mikroformen besteht darin, dass die von den Scannern erfassten Daten ausschließlich in speziellen elektronischen Schaltkreisen bzw. in mit Spezialsoftware ausgerüsteten Datenverarbeitungsanlagen weiterverarbeitet werden können. Darüber hinaus erlauben die bekannten Verfahren und Geräte entweder ausschließlich einen Zugriff auf Mikroformen mit analogen oder ausschließlich einen Zugriff auf Mikroformen mit digitalen Daten. Schließlich sind die bekannten digitalen Mikroformen für einen raschen Zugriff auf die Daten wenig geeignet.

Ausgehend von diesem Stand der Technik liegt der Erfindung die Aufgabe zu Grunde, ein Verfahren zumindest zum Lesen von auf einer Mikroform in Feldern gespeicherten analogen und/oder digitalen Daten sowie ein Gerät zur Durchführung des Verfahrens zu schaffen, dass eine Weiterverarbeitung der von dem Gerät erfassten Daten in einem herkömmlichen Personalcomputer ermöglicht. Schließlich soll eine vorteilhafte Mikroform angegeben werden, deren Daten schnell auslesbar sind und die aufgrund ihrer Struktur zur langfristigen und sicheren Archivierung von insbesondere auch digitalen Daten geeignet ist.

Diese Aufgabe wird durch ein Verfahren nach Anspruch 1, ein Gerät nach Anspruch 5 zur Durchführung des Verfahrens, und eine Mikroform nach Anspruch 8 gelöst.

In dem bei dem eingangs erwähnten Verfahren die auf der Mikroform gespeicherten analogen und/oder digitalen Daten von einer Steuereinheit des Gerätes der Datenverarbeitungsanlage so repräsentiert werden, als handele es sich bei der Mikroform um einen Wechseldatenträger, lässt sich das Gerät für den Zugriff auf die Mikroform an jedem herkömmlichen Personalcomputer unmittelbar wie ein herkömmlicher externer Massenspeicher für Wechseldatenträger, wie beispielsweise ein CD-ROM- oder DVD-Laufwerk anschließen. Im Vergleich zwischen dem Gerät für den Zugriff auf die Mikroform und einem Gerät mit Wechseldatenträger stimmen sowohl Anzahl, Bedeutung und Verhalten der elektrischen Anschlüsse als auch die von beiden Geräten verstandenen Softwarebefehle und deren Antwortverhalten auf diese Befehle überein.

Als Wechseldatenträger bezeichnet man ein in die Datenverarbeitungsanlage nicht fest eingebautes, sondern austauschbares, zumeist mobiles Speichermedium für Personalcomputer, das anstelle der sonst üblichen Festplatte zumeist als zusätzliches Medium zur Speicherung von Daten dient. Wechseldatenträger ermöglichen die Trennung der Daten vom Personalcomputer zum Zwecke der Datensicherheit oder den Datenaustausch zwischen unvernetzten Personalcomputern.

Arten von Wechseldatenträgern ergeben sich aus der nachfolgend eingeblendeten Tabelle:

**Tabelle 2: Arten von herkömmlichen *Wechseldatenträgen***

| Bezeichnung | Speicherung |
| --- | --- |
| Diskette | Magnetisch |
| ZIP | Magnetisch |
| JAZ | Magnetisch |
| REV | Magnetisch |
| CD | Optisch |
| DVD | Optisch |
| Wechselplatte | Magnetisch |
| MO/MOD | magneto-optisch |
| USB-Stick | Flash EEPROM |

(fortgesetzt)

| Bezeichnung | Speicherung |
|---|---|
| Speicherkarte (diverse Formate)Flash | EEPROM |

Die Daten auf den erfindungsgemäßen Mikroformen lassen sich, wie bei einem herkömmlichen Wechseldatenträger, ohne spezielle Software oder Anpassung der Datenverarbeitungsanlage unmittelbar mit herkömmlichen Bildbetrachtungs- bzw. Datenverwaltungsprogrammen anzeigen und/oder weiterverarbeiten, beispielsweise drucken, auf andere Speichermedien übertragen oder auf einem an die Datenverarbeitungsanlage angeschlossenen Bildschirm anzeigen.

Sofern auf der Mikroform ausschließlich analoge Daten gespeichert sind und die Mikroform kein Formatfeld aufweist, wird der Inhalt der Mikroform zunächst analysiert, indem die Anordnung und Anzahl der Felder mit analogen Daten durch Abtasten der in dem Gerät befindlichen Mikroform erfasst wird. Von der Steuereinheit des Gerätes für den Zugriff auf die Mikroform wird aus den bei der Abtastung gewonnenen Daten ein Dateisystem generiert und in einen Speicher der Steuereinheit abgelegt. Die Generierung erfolgt vorzugsweise derart, dass in einem ersten Schritt eine vollständige Abtastung der Mikroform mit insbesondere geringer Auflösung durchgeführt wird, um die Anordnung und Anzahl der Felder mit den analogen Daten zu erfassen. Die Felder sind entsprechend Tabelle 1 entweder in einem Rasterfeld mit einer definierten Anzahl von Reihen und Spalten angeordnet oder es findet sich lediglich ein Feld mit analogen Daten auf der Mikroform. Hieraus ergibt sich beispielsweise eine Anzahl von 1, 49, 98, 270 oder 420 Feldern, in denen analog gespeicherte Daten vorhanden sein können. Sodann wird im Speicher des Gerätes für den Zugriff auf die Mikroform das Dateisystem eines Wechseldatenträgers (zum Beispiel UDF [Universal Disk Format, Optical Storage Technology Association]) nachgebildet, in das Einträge der Form IMG_0001.tif. bis IMG_0420.tif oder IMG_0001.jpg bis IMG_0420.jpg geschrieben werden.

Bei Eingang eines Lesebefehls von der Datenverarbeitungsanlage überprüft die Steuereinheit, ob sich die angeforderten Daten bereits im Speicher der Steuereinheit befinden. Die Steuereinheit ermittelt mit Hilfe des Dateisystems, welche Felder der Mikroform erneut abgetastet werden müssen und führt die Abtastung der einzelnen Felder aus, sofern sich die angeforderten Daten nicht bereits im Speicher der Steuereinheit befinden. Die bei der erneuten Abtastung einzelner Felder erfassten analogen Daten, zum Beispiel fotographische Abbildungen, werden in ein zum Dateisystem konformes Daten-Format, beispielsweise in das Format ".tif" oder ".jpg", von der Steuereinheit gewandelt und an die Datenverarbeitungsanlage ausgegeben. Ein an das Gerät für den Zugriff auf die Mikroform über die HardwareSchnittstelle angeschlossener Personalcomputer wird auf einen Lesebefehl zunächst dieses Dateisystem erkennen und dann selbsttätig oder durch Benutzereingabe eine oder mehrere der durch die vorstehend genannten Einträge gekennzeichneten Dateien anfordern.

Sofern auf der Mikroform ausschließlich digitale Daten gespeichert sind, müssen dem Gerät für den Zugriff auf die Mikroform Informationen zur Struktur und Art der Datenspeicherung bekannt sein. Die Steuereinheit liest aus einem auf der Mikroform identifizierbaren Formatfeld sowie aus mindestens einem der Felder mit digitalen Daten Informationen zur Struktur und Art der Datenspeicherung aus. In dem mindestens einen Feld mit digitalen Daten befinden sich insbesondere Informationen zum Wieder finden der auf der Mikroform gespeicherten Dateien, also z.B. der Dateiname sowie Attribute, die nähere Informationen über die Datei geben. Die Attribute sind z.B. physische Adressen wie Block-und Sektornummern. Aus den aus dem Formatfeld und dem mindestens einen Feld mit digitalen Daten ausgelesenen Informationen generiert die Steuereinheit ein einem Wechseldatenträger entsprechendes Dateisystem und legt es in einem Speicher der Steuereinheit ab.

Die bei der anschließenden Abtastung einzelner Felder erfassten digitalen Daten einer Mikroform mit Formatfeld werden konform zu dem Dateisystem bei Eingang eines Lesebefehls an die Datenverarbeitungsanlage ausgegeben.

Die Erkennung des Formatfelds erfolgt mit an sich bekannten Mustererkennungsverfahren, die beispielsweise einen das Formatfeld umgebenden Doppelrahmen, den die Felder mit Daten nicht aufweisen, identifizieren. Durch die stets übereinstimmende Anordnung des Formatfeldes auf der Mikroform kann die Auslesegeschwindigkeit deutlich erhöht werden, weil die Mikroform zunächst lediglich in dem Bereich abgetastet werden muss, in dem sich standardisiert das Formatfeld der Mikroform befindet. Der Bereich für das Formatfeld kann beliebig festgelegt werden, beispielsweise in der linken oberen Ecke der Mikroform. Die Abtastung zum Auslesen des Formatfeldes erfolgt mit einer ersten Auflösung entsprechend der bekannten Datendichte des Formatfeldes, die vorzugsweise geringer als die Auflösung bei der anschließenden Abtastung einzelner Felder mit digitalen Daten ist.

Die Standardisierung der Informationen über die Struktur und Art der Datenspeicherung in dem Formatfeld an definierter Position auf der Mikroform ermöglichen es, dass Weiterentwicklungen derartiger Mikroformen, insbesondere solche mit höherer Datendichte in den Feldern für Daten, mit einem Gerät für den Zugriff auf die Mikroform der ersten Generation auslesbar sind, sofern die Abtasteinrichtung eine der erhöhten Datendichte entsprechende Auflösung aufweist.

Das erfindungsgemäße Verfahren erlaubt auch die Verarbeitung von Mikroformen, auf denen sowohl analoge als auch digitale Daten gespeichert sind, nachfolgend auch kurz als Hybrid-Mikroformen bezeichnet. Derartige Hybrid-Mikroformen weisen ebenfalls ein eindeutig identifizierbares Formatfeld auf, das von der Steuereinheit ausgelesen wird. Die Hybrid-Mikroform hebt die Beschränkung auf die Speicherung von ausschließlich analogen oder ausschließlich digitalen Daten auf einer einzigen Mikroform auf. Es lassen sich beliebige digitale Daten, wie beispielsweise Programme, Textdokumente, Digitalphotos, Audio- und Multimediadateien zusammen mit herkömmlichen analogen Bilddokumenten für sehr lange Zeiträume (500 Jahre und mehr) archivieren und auf einfache Art und Weise wieder zurücklesen.

Sofern die Mikroform sowohl analoge als auch digitale Daten aufweist, kann die Steuereinheit das einem Wechseldatenträger entsprechende Dateisystem, soweit die analogen Daten betroffen sind, wie weiter oben beschrieben, generieren und soweit die digitalen Daten betroffen sind, das Dateisystem unter Berücksichtigung der Informationen aus dem Formatfeld und mindestens einem weiteren Feld mit digitalen Daten, wie vorstehend beschrieben, generieren und in einem Speicher der Steuereinheit ablegen.

Schließlich erlaubt das erfindungsgemäße Verfahren auch die Verarbeitung von Mikroformen, auf denen ausschließlich analoge Daten gespeichert sind, die jedoch ein Formatfeld aufweisen. Die Steuereinheit liest aus dem auf der Mikroform identifizierbaren Formatfeld einer derartigen Mikroform Informationen zur Anordnung und Anzahl der Felder mit analogen Daten aus und generiert ein einem Wechseldatenträger entsprechendes Dateisystem aus diesen Informationen und legt dieses in einem Speicher der Steuereinheit ab.

Das Gerät für den Zugriff auf die Mikroform erlaubt die Durchführung des Verfahrens für den Zugriff auf mindestens einen der vorgenannten Typen von Mikroformen, vorzugsweise jedoch sämtliche Typen (Mikroform mit ausschließlich analogen Daten mit und ohne Formatfeld, Mikroform mit ausschließlich digitalen Daten, Hybridmikroform).

In einer Ausgestaltung des erfindungsgemäßen Verfahrens ist es vorgesehen, dass die Mikroform derart beschreibbar ist, dass die auf die Mikroform geschriebenen analogen und/oder digitalen Daten nach dem Schreiben von der Steuereinheit des Gerätes der Datenverarbeitungsanlage (PC) so repräsentiert werden können, als handele es sich bei der Mikroform um einen Wechseldatenträger. Hierzu ist es erforderlich, dass die Daten in Felder für analoge und/oder digitale Daten geschrieben und im Falle einer Mikroform mit digitalen Daten oder mit digitalen und analogen Daten ein Formatfeld sowie die weiteren Informationen des Dateisystems in mindestens eines der Felder für digitale Daten geschrieben werden.

Zum Beschreiben des Filmmaterials kann beispielsweise ein an der Abtastvorrichtung angeordneter Laser dienen. Bei Eingang eines Schreibbefehls von der Datenverarbeitungsanlage überprüft die Steuereinheit, ob sich eine beschreibbare Mikroform in dem Gerät befindet, und sofern dies der Fall ist, schreibt die Steuereinheit konform zu dem Dateisystem die von der Datenverarbeitungsanlage an das Gerät übertragenen Daten auf die Mikroform.

Eine erfindungsgemäße Mikroform für digitale und/oder analoge Daten weist vorzugsweise ein von einer Abtasteinrichtung identifizierbares Formatfeld mit Informationen zur Struktur und Art der Datenspeicherung und mehrere Felder zur Speicherung digitaler und/oder analoger Daten auf. Zumindest bereichsweise stimmen die Felder zur Speicherung der Daten in ihrer Größe überein und sind in einem Rasterfeld in Reihen und Spalten angeordnet.

Um das automatisierte Auffinden des Formatfeldes zu erleichtern, ist das Formatfeld vorzugsweise stets an derselben Stelle, insbesondere in der linken oberen Ecke des Rasterfeldes angeordnet.

Eine Hybrid-Mikroform weist sowohl in Reihen oder Spalten hintereinander angeordnete Felder zur Speicherung digitaler als auch in Reihen oder Spalten hintereinander angeordnete Felder zur Speicherung analoger Daten auf. Das Formatfeld enthält zumindest Strukturinformationen zur Lage der einzelnen Felder auf der Mikroform, zur Anzahl der Felder, zur Anzahl der Spalten und Reihen von Datenzellen jedes Feldes zur Speicherung digitaler Daten, zur Anordnung des ersten Feldes mit analogen Daten sowie zur Größe der in den Feldern zur Speicherung digitaler Daten adressierbaren Datenblöcke. Zur Art der Datenspeicherung sind in dem Formatfeld Parameter aufgezeichnet, die festlegen, ob die digitalen Daten durch Schwarzwerte bzw. Transparenz oder durch Graustufen oder Farbwerte gespeichert sind.

Ein Ausführungsbeispiel der Erfindung wird im Folgenden näher beschrieben. Es zeigen:

**Fig. 1a:** eine Vorderansicht eines Gerätes für den Zugriff auf eine Mikroform,

**Fig. 1b:** eine Rückansicht des Gerätes nach Figur 1,

**Fig. 2:** eine Aufsicht auf eine Vorrichtung zum Einziehen und Ausgeben einer Mikroform des Gerätes nach Figur 1,

**Fig. 3:** eine Aufsicht auf eine Abtast-/Schreibeinrichtung eines Geräts nach Figur 1 sowie eine Seitenansicht eines Lese-Schreibschlittens,

**Fig. 4:** ein Blockschaltbild einer Steuereinheit des Geräts nach Figur 1,

**Fig. 5:** ein Flussdiagramm des Steuerprogramms für die Initialisierung des Geräts,

**Fig. 6:** ein Flussdiagramm des Steuerprogramms für einen Schreib-/Lesezyklus des Geräts,

**Fig. 7:** ein Flussdiagramm des Steuerprogramms für einen Ausgabezyklus des Geräts,

**Fig. 8:** eine Darstellung eines Mikrofiche nach DIN ISO 9923 zur Veranschaulichung der Lage eines Formatfeldes,

**Fig. 9:** eine vergrößerte Darstellung des Formatfeldes,

**Fig. 10:** eine Aufsicht auf eine Hybrid-Mikroform,

**Fig. 11:**   eine vergrößerte Darstellung eines Feldes für digitale Daten sowie

**Fig. 12:**   eine Aufsicht auf eine Mikroform zur Speicherung digitaler Daten mit einem Datenfeld.

**1. Aufbau der Gerätes**

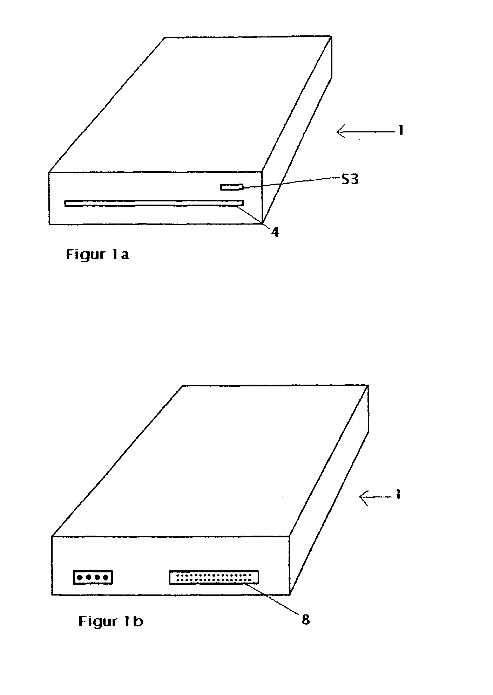

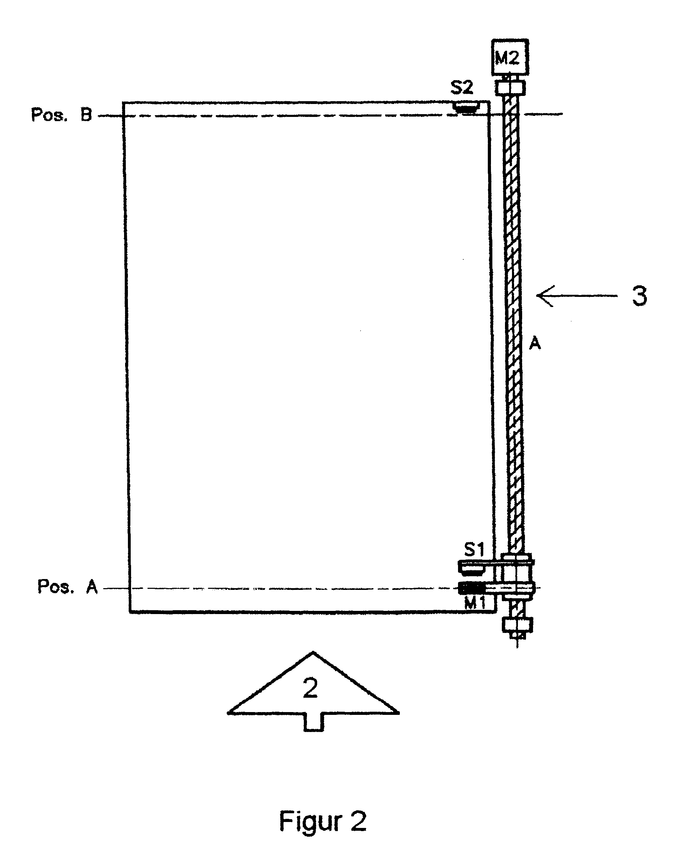

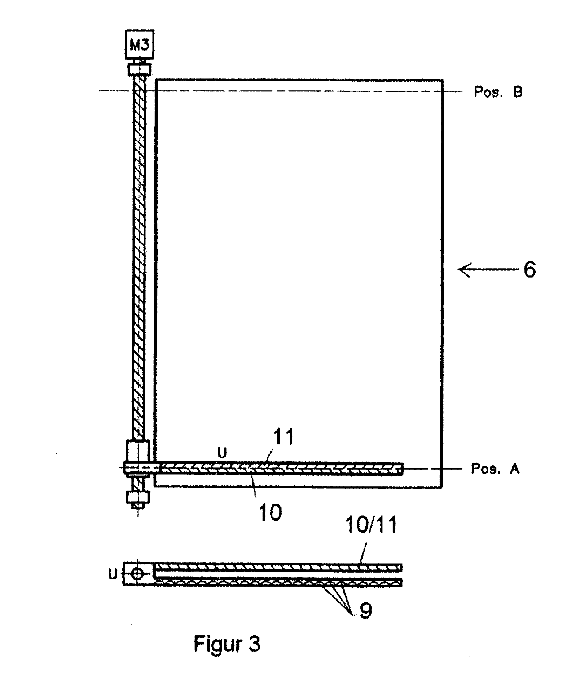

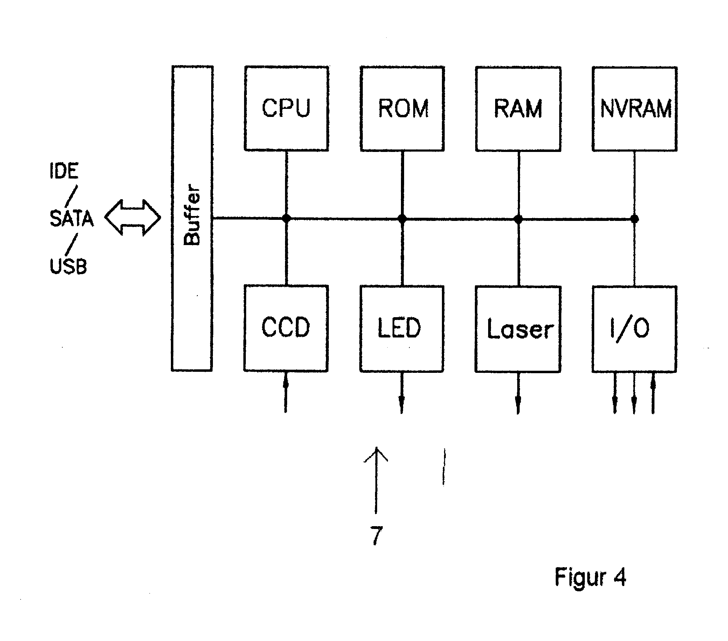

Das Gerät 1 für den Zugriff auf eine Mikroform 2 (Figuren 1a, 1b) besteht im Wesentlichen aus
einer Vorrichtung 3 zum Einziehen und Ausgeben einer Mikroform 2 mit einem Aufnahmeschacht 4 für die Mikroform
2, die mittels eines Auswurfknopfes S3 ausgegeben werden kann (Figur 2),
einer Abtast-/Schreibeinrichtung 6 zur Durchführung einer Abtastung oder eines Schreibvorgangs auf der in dem Gerät
1 befindlichen Mikroform 2 (Figur 3),
einer programmgesteuerten Steuereinheit 7, die die auf der Mikroform 2 gespeicherten und mit der Abtasteinrichtung
6 erfassten analogen und/oder digitalen Daten einer an das Gerät 1 über eine Hardwareschnittstelle 8 angeschlossenen
Datenverarbeitungsanlage so repräsentiert, als handele es sich bei der in den Aufnahmeschacht 4 einziehbaren Mikroform 2 um einen Wechseldatenträger (Figur 4).

a) Vorrichtung 3 zum Einziehen und Ausgeben einer Mikroform 2:

Die Vorrichtung 3 sorgt dafür, dass die Mikroform 2 in das Gerät 1 eingezogen und wieder ausgegeben werden
kann. Durch einen optionalen, in Figur 1 a nicht dargestellten Schieber am Aufnahmeschacht 4 können ggf. auch
verschiedene Mikroform-Formate (z. B. Mikroplanfilm (Mikrofiche), Filmkarte und 35-mm-Filmstreifen (letzte evtl. auf
einem Träger)) eingeführt werden. Durch Einführen der Mikroform 2 in den Aufnahmeschacht 4 wird ein direkt hinter
der Schachtöffnung liegender Kontakt eines Mikroschalters S1 betätigt, der einen magnetisch betätigten Halter, nachfolgend als Magnethalter M1 bezeichnet, aktiviert. Dieser erfasst die Mikroform 2 und zieht sie mittels eines Motors M2,
welcher eine Schneckenwelle A antreibt, in den Aufnahmeschacht 4 des Gerätes 1 ein, bis der abzutastende Bereich
der Mikroform 2 vollständig im Verfahrbereich der Abtast-/Schreibeinrichtung 6 (Figur 3) liegt.

Durch Betätigen des Auswurfknopfes S3 oder aufgrund eines Steuerbefehls der Steuereinheit 7 wird die Mikroform 2 durch Drehrichtungsumkehr des Motors M2 wieder ausgeworfen.

b) Abtast-/Schreibeinrichtung 6:

Die Abtast-/Schreibeinrichtung 6 besteht aus einem U-förmigen Schlitten U, dessen eine Seite eine Zeile mit
Strahlungsquellen 9, z.B. in Form von LEDs, und dessen andere Seite einen elektronischen Sensor 10, z. B. eine CCD-
Zeile (Charge Coupled Device), trägt. Der Schlitten U wird durch eine von einem Motor M3 angetriebene Schneckenwelle
B über einen abzutastenden Bereich der Mikroform 2 bewegt. Die Zeile mit den Strahlungsquellen 9 verfügt vorzugsweise
über eine Helligkeitssteuerung, um eine Anpassung an die Lichtdurchlässigkeit der Mikroform 2 zu ermöglichen. Sowohl
die Zeile mit Strahlungsquellen 9 als auch der Sensor 10 in Form der CCD-Zeile werden über die Steuereinheit 7
angesteuert.

Zusätzlich kann der Schlitten U über eine Möglichkeit verfügen, die Strahlungsquellen 9 und den Sensor 10
relativ zur Mikroform 2 zu verdrehen, um sich optimal an die Lage der zu lesenden Daten anzupassen.

Im dargestellten Ausführungsbeispiel ist das Gerät 1 nicht nur mit einer Abtasteinrichtung, sondern zusätzlich
mit einer optionalen Schreibeinrichtung in Form von Lasern 11 ausgestattet, um beschreibbare Mikroformen 2 mit Daten
beschreiben zu können. Wie in der Seitenansicht der Figur 3 dargestellt, ist die Schreibeinrichtung zweckmäßigerweise
an dem gleichen Schlitten U wie die Abtasteinrichtung angebracht. Die Laser 11 sind parallel zu dem Sensor 10 angeordnet.

c) Programmgesteuerte Steuereinheit 7:

Die Steuereinheit 7 besteht aus einer Anordnung von Halbleiter-Schaltkreisen mit Elementen gemäß Figur 4.

Die wesentliche Aufgabe der programmgesteuerten Steuereinheit 7 besteht darin, die auf der Mikroform 2
gespeicherten und mit der Abtast-/Schreibeinrichtung 6 erfassten analogen und/oder digitalen Daten in ein Format
umzuwandeln, so dass sie sich einer an das Gerät 1 angeschlossenen Datenverarbeitungsanlage, insbesondere einem
Personal-Computer, so repräsentieren, als handele es sich bei der in den Aufnahmeschacht 4 einziehbaren Mikroform
2 um einen herkömmlichen Wechseldatenträger.

Hierzu wird ein Mikrocontroller mit Zentraleinheit CPU, ein Festwertspeicher ROM, ein Arbeitsspeicher RAM,
der zugleich als Speicher für die von der Mikroform einzulesenden Daten und das Dateisystem dient, ein nichtflüchtiger,
wiederbeschreibbarer Speicher NVRAM für das Steuerprogramm der Steuereinheit 7 sowie

-   eine Peripheriekomponente CCD zum Einlesen der Sensorsignale, insbesondere der erfassten Helligkeits- bzw.

Farbwerte des Sensors 10, der Abtast-/Schreibeinrichtung 6, deren Zuordnung zur jeweiligen Leseposition und Speicherung im Arbeitsspeicher RAM,

- eine Peripheriekomponente LED zum Steuern der Helligkeit der mindestens einen elektromagnetischen Strahlungsquelle 9,

- eine Peripheriekomponente I/O zum Steuern der Vorrichtung 3 zum Einziehen und Ausgeben der Mikroform sowie des Bewegungsantriebs M3 der Abtast-/Schreibeinrichtung 6 sowie

- eine Peripheriekomponente LASER zum Steuern der Schreibeinrichtung 11 der Abtast-/Schreibeinrichtung 6

eingesetzt.

Der wiederbeschreibbare Speicher NVRAM ermöglicht die Aktualisierung des Maschinencodes, z. B. zur Unterstützung neu hinzugekommener Speicherformate.

Die vorgenannten Peripheriekomponenten der Steuereinheit 7 dienen zum Einlesen von Sensorsignalen sowie zur Steuerung der Motoren, der Abtasteinheit und der Schreibeinheit:

Zum Steuern der Vorrichtung 3 zum Einziehen und Ausgeben der Mikroform 2 sowie des Bewegungsantriebs M3 der Abtast-/Schreibeinrichtung 6 liest die Peripheriekomponente I/O den Status der Mikroschalter S1 (Mikroform eingelegt), S2 (Schreib/Leseschlitten U in Endposition Pos. B) und S3 (Auswurftaster) ein; sie verfügt weiterhin über Ausgänge zur Ansteuerung des Magnethalters M1 sowie zur Steuerung der Motoren M2 (Mikroform-Einzug/Ausgabe) und M3 (Bewegung des Schreib/Leseschlittens U).

Das Steuerprogramm der Steuereinheit 7 ist zuständig für das Zusammenspiel der Abtast-/Schreibeinrichtung 6 und der Hardwareschnittstelle 8 zum Anschluss der Datenverarbeitungsanlage.

## 2. Steuerprogramm

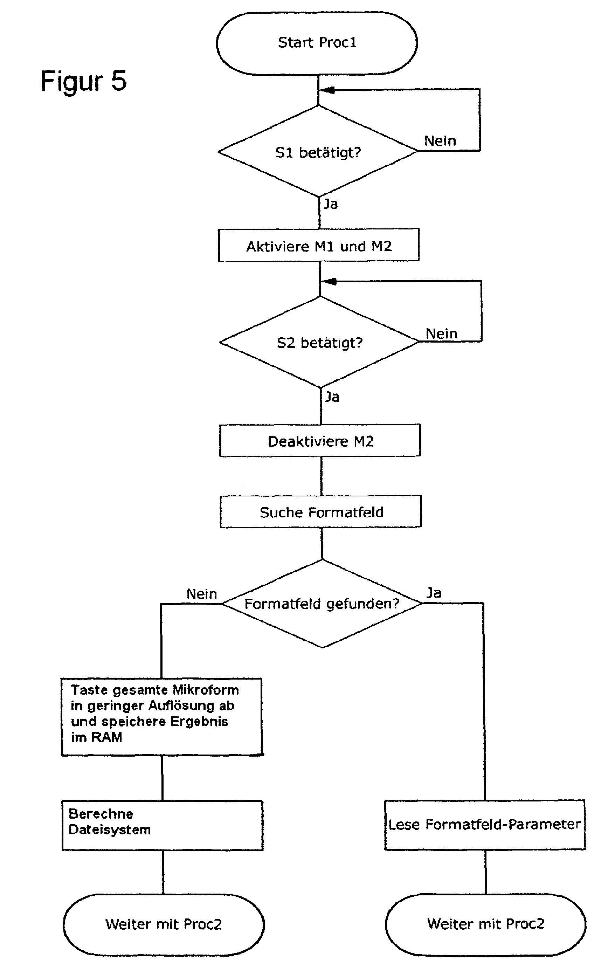

Fig. 5 bis 7 zeigen die Flussdiagramme des Steuerprogramms für die Initialisierung, für einen Schreib-/Lesezyklus und einen Auswurfzyklus:

Nach dem Einschalten des Gerätes startet die Prozedur Proc1 (Figur 5) mit der Statusabfrage des Mikroschalters S1. Dieser wird betätigt durch Einschieben einer Mikroform 2, z.B. eines Mikrofiche 2, in das Gerät 1. Damit wird der Magnethalter M1, welcher den Mikrofiche festhält und an die Schneckenwelle A koppelt, aktiviert und der Motor M2 setzt die Schneckenwelle A in Bewegung, wodurch sich Magnethalter M1 und Mikrofiche 2 in Richtung des Mikroschalters S2 bewegen. Ist der Mikrofiche 2 an der Endposition Pos. B angekommen, betätigt er den Mikroschalter S2, worauf der Motor M2 wieder abgeschaltet wird.

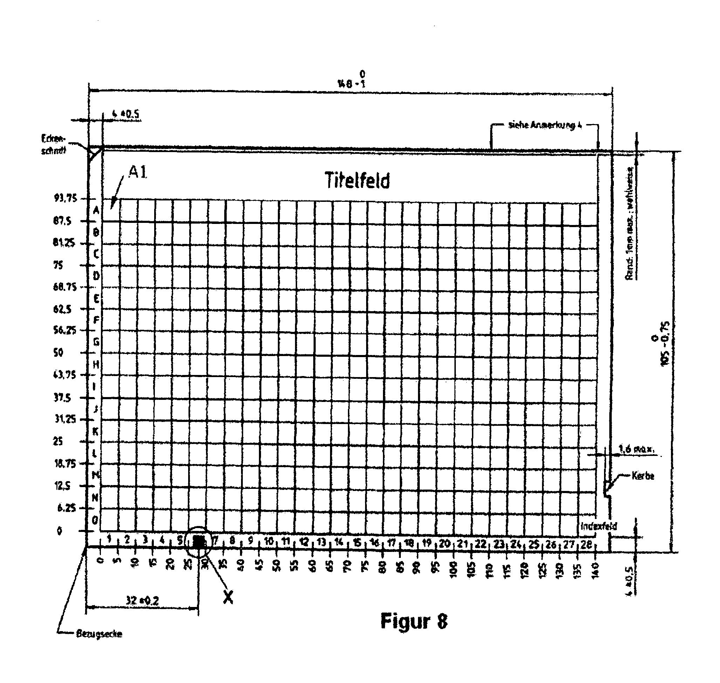

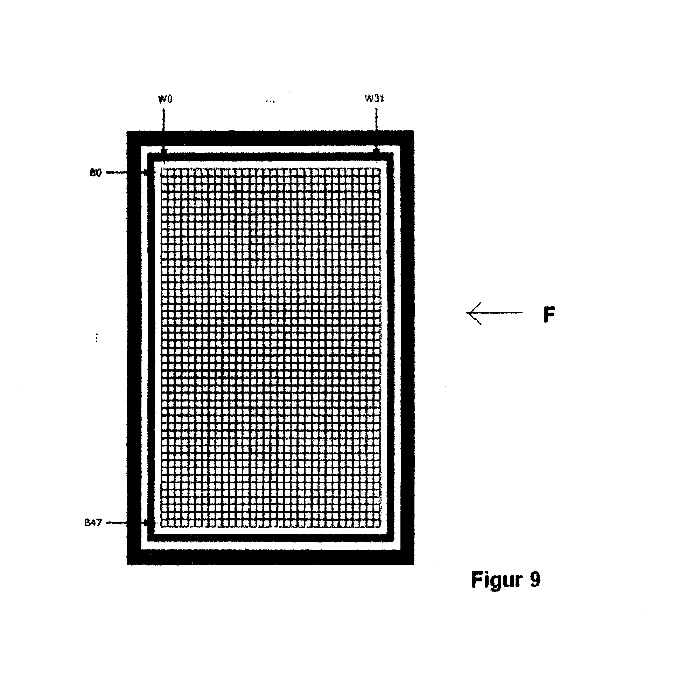

Nun wird der Mikrofiche 2 mit einer ersten, vorzugsweise hohen Auflösung mittels des optoelektronischen Sensors 10 in Form der CCD Zeile abgetastet. Der Motor M3 fährt den den Mikrofiche 2 umgreifenden Schlitten U dafür in denjenigen Bereich des Mikrofiche 2, in dem sich das Formatfeld F (siehe Figur 8, A1 und Figur 9) einer Mikroform für digitale Daten oder einer Hybrid-Mikroform oder auch einer Mikroform für analoge Daten mit Formatfeld F befindet. Das Formatfeld F wird mittels herkömmlicher Mustererkennungsverfahren aus der digitalen Bildverarbeitung auf dem Mikrofiche 2 gesucht und identifiziert. In diesem Ausführungsbeispiel weist das Formatfeld F (siehe Figur 9) einen charakteristischen Doppelrahmen mit unterschiedlicher Linienstärke und in der ersten Zeile *W0* ein immer gleiches Bitmuster auf.

Wurde kein Formatfeld F gefunden, nimmt die Steuereinheit 7 des Gerätes 1 an, dass es sich bei der eingelegten Mikroform 2 um einen herkömmlichen analogen Mikrofiche mit ausschließlich analogen Daten in seinen Feldern und ohne Formatfeld handelt und führt eine Abtastung des gesamten Mikrofiche mit einer vorzugsweise gegenüber der ersten partiellen Abtastung niedrigeren Auflösung durch, indem der Schlitten U der Abtast-/ Schreibeinrichtung 6 über die volle Längserstreckung des in dem Gerät befindlichen Mikrofiche 2 verfahren wird. Bei der Abtastung wird mit Hilfe herkömmlicher Mustererkennungsverfahren die Anzahl und Größe der Felder mit analogen Daten (Bildfelder) ermittelt. Nach DIN ISO 9923 können sich auf dem Mikrofiche 49 (7 x 7), 98 (7 x 14), 270 (15 x 18) oder 420 (15 x 28) Bildfelder oder ein einzelnes, sich über den gesamten Mikrofiche erstreckendes Bildfeld befinden. Aus diesem Ergebnis der vollständigen Abtastung wird ein Dateisystem generiert. In dem Dateisystem werden diese Bildfelder z. B. wie folgt repräsentiert:

**Tabelle 2: Dateisystem für analoge Daten**

| Dateiname | Bedeutung |
|---|---|
| IMG_0000.TIF | Bilddaten aller Bildfelder in niedriger Auflösung |
| IMG_0001.TIF | Bilddaten von Bildfeld 1 in hoher Auflösung |
| : | : |
| IMG_nnnn.TIF | Bilddaten von Bildfeld nnnn in hoher Auflösung |

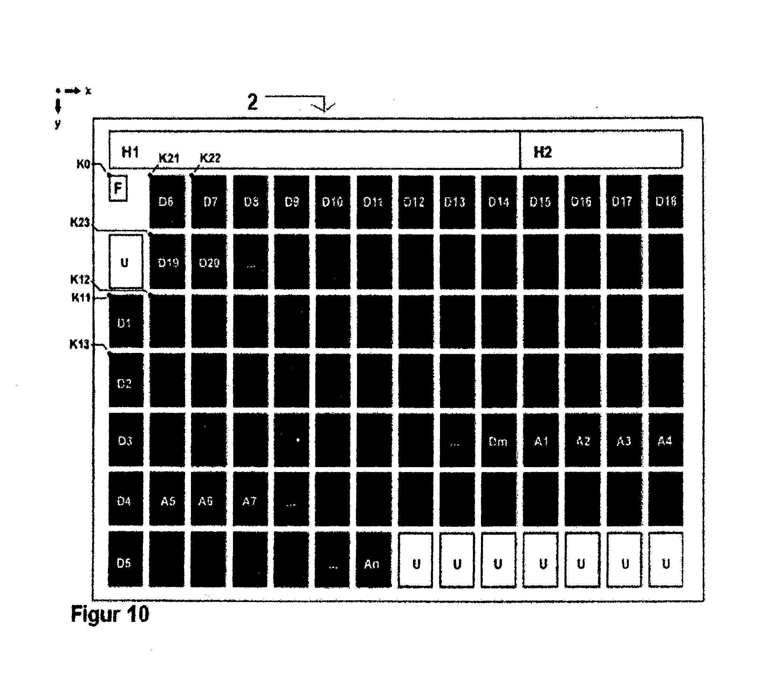

Wurde bei der ersten partiellen Abtastung ein Formatfeld F gefunden, liegt eine Mikroform 2 mit digitalen Daten oder eine Hybrid-Mikroform oder auch eine Mikroform für analoge Daten mit Formatfeld F vor und es wird das Formatfeld F sowie im Fall einer Mikroform 2 mit digitalen Daten oder eine Hybrid-Mikroform mindestens eines der Felder mit digitalen Daten ausgelesen und das Dateisystem generiert. Die Informationen zur Struktur und Art der Datenspeicherung sind für eine Mikroform 2 mit digitalen Daten oder eine Hybrid-Mikroform in dem Formatfeld F auf dem Mikrofiche 2 als Parameter W1 bis W31 sowie üblicherweise im ersten Feld mit digitalen Daten (vgl. Feld D1 in Figur 10) abgelegt. Die Parameter werden anhand von Figur 10 weiter unten näher erläutert.

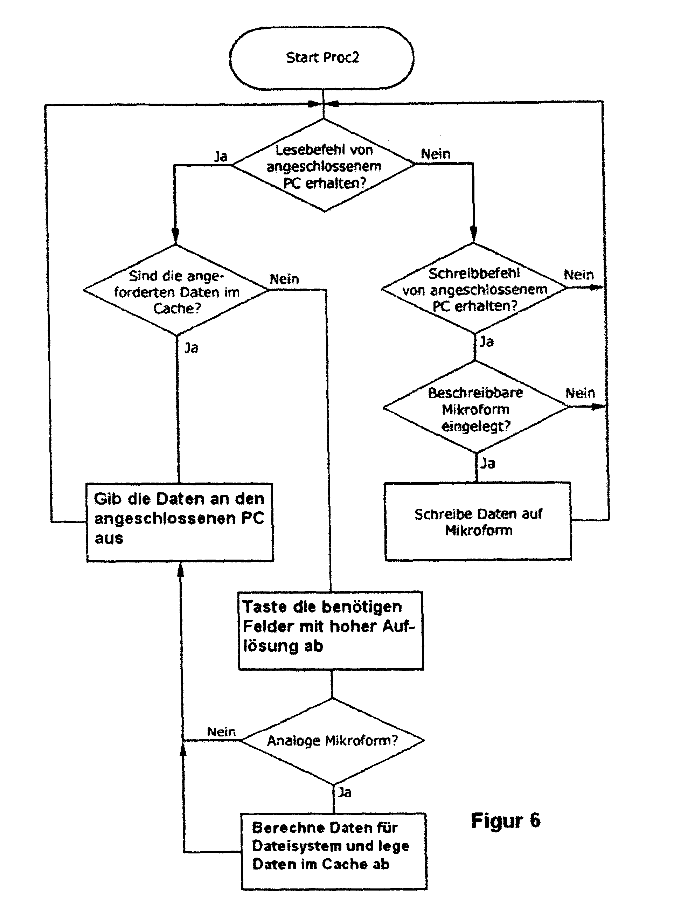

Sowohl für Mikroformen mit Formatfeld als auch solche ohne Formatfeld wird der Programmablauf des Steuerprogramms mit einem Lesezyklus gemäß der Prozedur Proc2 fortgesetzt, deren Flussdiagramm in Figur 6 dargestellt ist:

Das Gerät 1 wartet auf einen Steuerbefehl von einer angeschlossenen Datenverarbeitungsanlage, insbesondere von einem Personalcomputer PC. Handelt es sich um einen Lesebefehl, wird zunächst geprüft, ob die angeforderten Daten sich schon im Cache (Teil des Arbeitsspeichers RAM der Steuereinheit 7) befinden. Falls ja, werden die Daten an den Personalcomputer PC ausgegeben. Falls nein, ermittelt die Steuereinheit 7, welche Felder mit analogen oder digitalen Daten mit der Abtast-Schreibeinrichtung 6 abgetastet werden müssen und führt die Abtastung durch.

Handelt es sich um eine Mikroform mit digitalen Daten bzw. eine Hybrid-Mikroform oder mit ausschließlich analogen Daten und Formatfeld (was durch Proc1 - Figur 5 bekannt ist), werden die Daten konform zum Dateisystem ausgegeben.

Sollen Daten von einer Mikroform mit ausschließlich analogen Daten gelesen werden, werden nun die noch nicht im Cache befindlichen analogen Daten in ein Datenformat, z.B. JPG oder TIF, umgewandelt, welches konform mit dem generierten Dateisystem ist. Diese von der Steuereinheit 7 berechneten Daten werden dann an den Personalcomputer PC ausgegeben. Handelt es sich bei dem Steuerbefehl um einen Schreibbefehl und ist eine beschreibbare Mikroform 2 im Gerät 1 vorhanden, werden die Daten auf die Mikroform 2 mit Hilfe des Lasers 11 geschrieben.

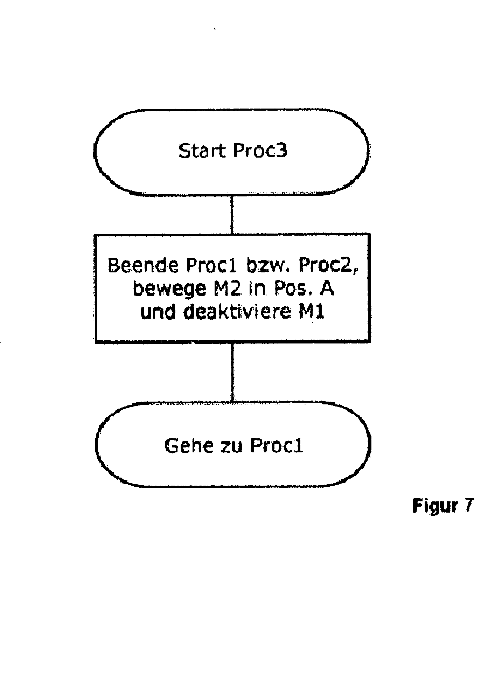

Die Prozedur Proc2 wird durch Betätigen des Auswurfknopfes S3, was der Steuereinheit 7 z. B. durch einen Hardware-Interrupt bekannt gegeben wird, beendet und es wird zu der Prozedur Proc3 verzweigt, deren Flussdiagramm in Figur 7 dargestellt ist:

Nach Betätigen des Auswurfknopfes S3 werden noch aktive Initialisierungsvorgänge der Proc1 bzw. Schreib/Lesevorgänge der Proc2 beendet. Der Motor M2 transportiert die Mikroform 2 aus dem Aufnahmeschacht 4 heraus und schaltet den Magnethalter M1 ab, so dass die Mikroform 2 freigegeben und dem Gerät 1 entnommen werden kann.

### 3. Beschaffenheit der Mikroform

Das Gerät 1 ist in der Lage, nicht nur Mikroformen 2 mit analogen, sondern auch mit digitalen Daten oder Hybrid-Mikroformen abzutasten. Nachfolgend wird eine als Mikrofiche ausgestaltete Hybrid-Mikroform 2 mit in Feldern gespeicherten digitalen und analogen Daten und dem Formatfeld F näher beschrieben. Das Formatfeld F kann selbstverständlich auch für andere Mikroformen, z. B. eine Filmkarte, verwendet werden.

Um eine Hybrid-Mikroform 2 abtasten und auslesen zu können, muss die Steuereinheit 7 des Gerätes 1 in der Lage sein, Informationen über die Struktur und Art der Datenspeicherung auf der Mikroform 2, insbesondere über das Aufzeichnungsverfahren und die Lage und Dichte der digital gespeicherten Daten, zu erlangen. Diese Informationen müssen auf der Mikroform 2 in einer Weise abgelegt sein, dass diese eindeutig identifiziert werden können.

Eine Mikroform mit ausschließlich digitalen Daten oder eine Hybrid-Mikroform oder auch einen Mikroform mit ausschließlich analogen Daten weist das bereits weiter oben erwähnte Formatfeld F auf, welches durch seine Beschaffenheit eindeutig erkennbar und auswertbar ist. In Figur 8 wird diese Bedingung durch eine feste Lokalisation des Formatfeldes F an der Stelle A1 im oberen linken Feld eines Mikrofiches nach DIN ISO 9923, (mit 420 Bildfeldern) und dessen definierte Form erfüllt:

In dem vergrößert in Figur 9 dargestellten Areal des Formatfeldes F ist eine Matrix untergebracht, die aus 32 x 48 Bildpunkten besteht. Diese Matrix wird zur Speicherung von 32 digitalen Werten (Parametern) W0 bis W31 zu jeweils 32 Bit Länge verwendet. Die Matrixzellen B0 bis B31 dienen der Speicherung des jeweiligen Wertes (Parameters). Die übrigen 32 x 16 Bit (Matrixzellen B32 bis B47) werden zur Speicherung von Redundanzinformationen zur Fehlererkennung und -korrektur benutzt.

Durch Festlegung der Parameter für die Formatierung des Formatfeldes F und deren Beibehaltung für alle Mikroformen mit digitalen Daten und Hybrid-Mikroformen ist es dem Gerät 1 möglich, auch solche Mikroformen zu verarbeiten, die erst mit der zukünftigen technischen Entwicklung möglich sind. Die Repräsentation der gespeicherten Inhalte gegenüber dem angeschlossenen Personalcomputer PC bleibt dabei durch das übereinstimmende Dateisystem gleich und gewährleistet eine gerade für Langzeitarchivierungsaufgaben wichtige Auslesesicherheit. Eine logische '1' wird in dem Formatfeld F durch eine intransparente (dunkle), eine "0" durch eine transparente Matrixzelle B0 - B31 gekennzeichnet.

Eine erfindungsgemäße Hybrid-Mikroform hat das in Figur 10 dargestellte Aussehen, wobei sich die Bezeichnungen und Bedeutungen der in Figur 10 bezeichneten Abkürzungen aus der nachfolgenden Tabelle ergeben:

**Tabelle 3 : Abkürzungen Hybrid-Mikroform nach Figur 10**

| H1 | Headerfeld 1 | Enthält durch Menschen lesbare Kennzeichnung |
|---|---|---|
| H2 | Headerfeld 2 | zur Aufnahme z. B. eines Barcodes |
| F | Formatfeld | Informationen zur Struktur und zur Art der Datenspeicherung |
| D1...Dm | Datenfelder 1..m | Felder mit digitalen Daten (Datenfelder) |
| A1...An | Analogfelder 1..n | Felder mit analogen Daten (Analogfelder) |
| U | Unbenutzt | Felder ohne Daten |
| K0 | K0-Koordinaten | Lage des Koordinatenkreuzes des Formatfeldes |
| K11 | K11-Koordinaten | Lage des Koordinatenkreuzes des ersten Datenfeldes im Bereich 1 |
| K12 | K12-Koordinaten | Lage des Koordinatenkreuzes des in x-Richtung nächsten Datenfeldes im Bereich 1 |
| K13 | K13-Koordinaten | Lage des Koordinatenkreuzes des in y-Richtung nächsten Datenfeldes im Bereich 1 |
| K21 | K21-Koordinaten | Lage des Koordinatenkreuzes des ersten Datenfeldes im Bereich 2 |
| K22 | K22-Koordinaten | Lage des Koordinatenkzeuzes des in x-Richtung nächsten Datenfeldes im Bereich 2 |
| K23 | K23-Koordinaten | Lage des Koordinatenkreuzes des in y-Richtung nächsten Datenfeldes im Bereich 2 |

"Bereich 1" benennt eine Anordnung von Datenfeldern, deren Erstreckung durch die Koordinaten K11, K12, K13 sowie die Zahl der Datenfelder in x- bzw. y-Richtung festgelegt ist. Die Zählung der Datenfelder in Bereich 1 beginnt bei dem durch K11 bestimmten Datenfeld mit 1 in x-Richtung und dann zeilenweise fortschreitend.

"Bereich 2" benennt eine Anordnung von Datenfeldern, deren Erstreckung durch die Koordinaten K21, K22, K23 sowie die Zahl der Datenfelder in x- bzw. y-Richtung festgelegt ist. Die Zählung der Datenfelder in Bereich 2 beginnt bei der um 1 erhöhten Nummer des letzten Datenfeldes in Bereich 1.Über wie viele Datenfelder sich die Bereiche 1 und 2 erstrecken, legen Werte (Parameter) im Formatfeld F fest. Die Datenfelder D 1..m dürfen sich nicht überschneiden.

Das Formatfeld F einer Hybrid-Mikroform nach Figur 10 trägt in den ersten beiden 32-Bit-Werten (Parametern) den folgenden Inhalt:

**Tabelle 4 : Formatfeld Teil 1**

| Nr. | Name | Bedeutung | Wert | Bits |
|---|---|---|---|---|
| 0 | SNYC | Synchronisation | Binär | 32 |

(fortgesetzt)

| Nr. | Name | Bedeutung | Wert | Bits |
|---|---|---|---|---|
| | | | 10000000000000011110000000000001 | |
| 1 | FMT | Physikalisches Aufzeichnungsformat | z. B. 0 = ungültig; 1 = schwarz/weiß; 2 = 16 Graustufen, ... | 32 |

Der Parameter SYNC hat immer einen konstanten Wert und dient, gemeinsam mit der Umrandung (siehe Figur 9) zur Lokalisierung des Formatfeldes F.

Der Parameter FMT legt die Art der Datenspeicherung und das Format der nachfolgenden Parameter innerhalb des Formatfeldes fest:

FMT 0 ungültig

1 Mikrofiche, auf dem die digitalen Daten durch Schwarzwerte bzw. Transparenz gespeichert sind.

2 Mikrofiche, auf dem die digitalen Daten durch 16 Graustufen (ein Pixel entspricht 4 Bit) gespeichert sind.

Ist FMT = 1 oder 2, gelten die folgenden Festlegungen für weitere Parameter des Formatfeldes:

**Tabelle 5: Formatfeld Teil 2**

| Nr. | Name | Bedeutung | Einheit | Wertebereich | Bits |
|---|---|---|---|---|---|
| 2 | DK11X | Distanz von $K11_x$ zu $K0_x$ | Nanometer | 0 .. 140.000.000 | 32 |
| 3 | DK11Y | Distanz von $K11_y$ zu $K0_y$ | Nanometer | 0 .. 95.000.000 | 32 |
| 4 | DK12X | Distanz von $K12_x$ zu $K11_x$ | Nanometer | 0 .. 140.000.000 | 32 |
| 5 | DK13Y | Distanz von $K13_y$ zu $K11_y$ | Nanometer | 0 .. 95.000.000 | 32 |
| 6 | DK21X | Distanz von $K21_x$ zu $K0_x$ | Nanometer | 0 .. 140.000.000 | 32 |
| 7 | DK21Y | Distanz von $K21_y$ zu $K0_y$ | Nanometer | 0 .. 95.000.000 | 32 |
| 8 | DK22X | Distanz von $K22_x$ zu $K21_x$ | Nanometer | 0 .. 140.000.000 | 32 |
| 9 | DK23Y | Distanz von $K23_y$ zu $K21_y$ | Nanometer | 0 .. 95.000.000 | 32 |
| 10 | N1X | Anzahl der Felder in Bereich 1, x-Richtung | numerischer Wert | 0 .. 255 | 32 |
| | N1Y | Anzahl der Felder in Bereich 1, y-Richtung | numerischer Wert | 0 .. 255 | |
| | N2X | Anzahl der Felder in Bereich 2, x-Richtung | numerischer Wert | 0 .. 255 | |
| | N2Y | Anzahl der Felder in Bereich 2, y-Richtung | numerischer Wert | 0 .. 255 | |

(fortgesetzt)

| Nr. | Name | Bedeutung | Einheit | Wertebereich | Bits |
|---|---|---|---|---|---|
| 11 | LPF1 | Zeilen pro Datenfeld in Bereich 1 | numerischer Wert | 0 .. 4.294.967.295 | 32 |
| 12 | CPF1 | Spalten pro Datenfeld in Bereich 1 | numerischer Wert | 0 .. 4.294.967.295 | 32 |
| 13 | GX1 | Distanzzeilen zum nächsten Feld (X) in Bereich 1 | numerischer Wert | 0 .. 65.535 | 32 |
|  | GY1 | Distanzspalten zum nächsten Feld (Y) in Bereich 1 | numerischer Wert | 0 .. 65.535 |  |
| 14 | LPF2 | Zeilen pro Datenfeld in Bereich 2 | numerischer Wert | 0 .. 4.294.967.295 | 32 |
| 15 | CPF2 | Spalten pro Datenfeld in Bereich 2 | numerischer Wert | 0 .. 4.294.967.295 | 32 |
| 16 | GX2 | Distanzzeilen zum nächsten Feld (X) in Bereich 2 | numerischer Wert | 0 .. 65.535 | 32 |
|  | GY2 | Distanzspalten zum nächsten Feld (Y) in Bereich 2 | numerischer Wert | 0 .. 65.535 |  |
| 17 | SP1 | Sektorgröße im Bereich 1 | Bytes | 432 .. 65.535 | 32 |
|  | SP2 | Sektorgröße im Bereich 2 | Bytes | 432 .. 65.535 |  |
| 18 | FAFN | Erste Feldnummer mit analogen Daten | numerischer Wert | 0 .. 65.535 | 32 |
|  | FUFN | Erste Feldnummer ohne Daten | numerischer Wert | 0 .. 65.535 |  |
| 19 |  | reserviert |  |  | 32 |
| : |  | : |  |  | 32 |
| 31 |  | reserviert |  |  | 32 |

Beginnend mit dem Feld D1 werden die digitalen Daten sektorenweise angeordnet.

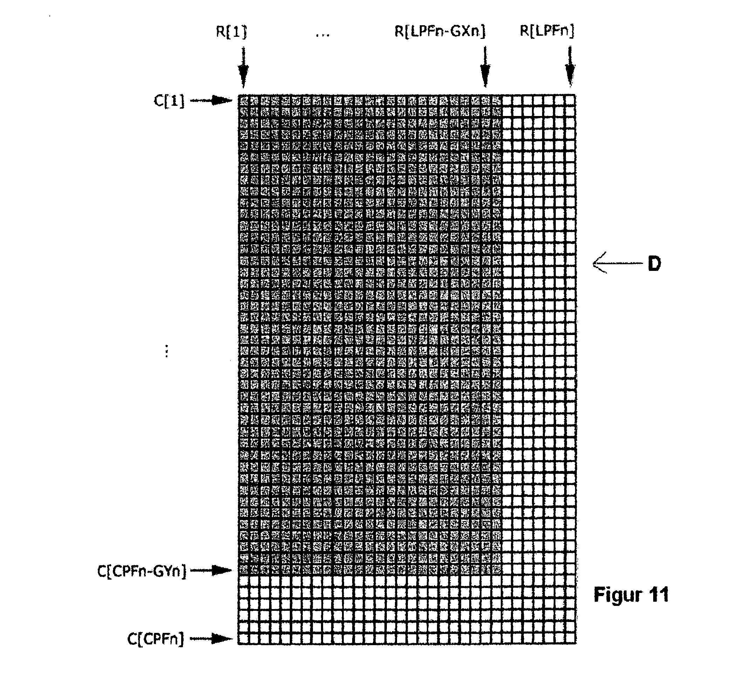

Die Datenfelder D weisen jeweils die in Figur 11 erkennbare Struktur auf. Jedes Datenfeld D ist in Spalten C und Reihen R aufgeteilt. Die Reihen verlaufen senkrecht zur normalen Betrachtungsrichtung, die Spalten waagerecht. In Figur 11 grau markiert sind die Datenzellen, die tatsächlich digitale Daten enthalten. Bei den weißen Zellen der Matrix handelt es sich um die in Tabelle 5 unter der Nr. 16 angeführten Distanzzeilen bzw. Distanzspalten ohne Inhalt.

LPFn, GXn, CPFn und GYn mit n = {1, 2} entsprechen den Parametern des Formatfeldes F, die sich aus den laufenden Nummern 11., 14., 13.,16., 12. und 15. der Tabelle 5 ergeben.

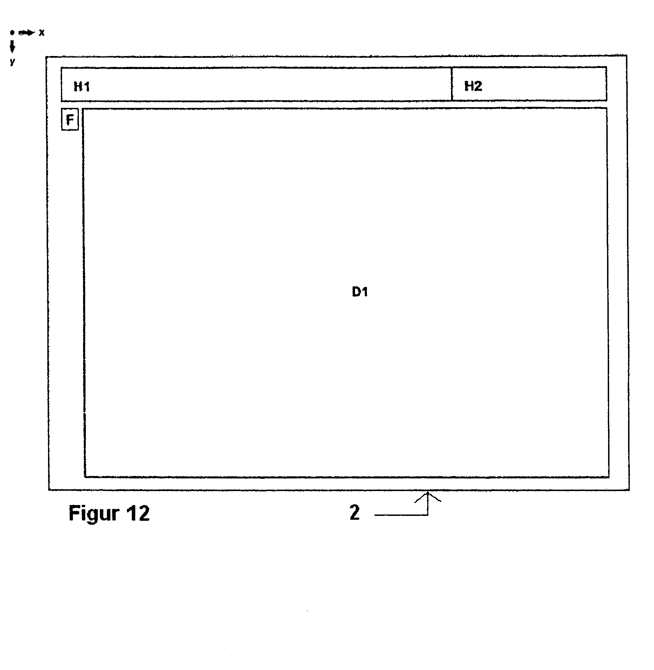

Für ein in Figur 12 dargestelltes einfaches Ausführungsbeispiel einer erfindungsgemäßen Mikroform 2 mit einem Formatfeld F sowie nur einem Datenfeld D1 zur Speicherung ausschließlich digitaler Daten werden gemäß der Tabelle 5 die folgenden konkreten Werte für die Parameter des Formatfeldes zugrunde gelegt:

**Tabelle 6: Ausführungsbeispiel Formatfeld für Mikroform nach Fig. 12**

| Nr. | Name | Bedeutung | Einheit | Wart | Bits |
|---|---|---|---|---|---|
| 2 | DK11X | Distanz von $K11_x$ zu $K0_x$ | Nanometer | 5.000.000 | 32 |
| 3 | DK11Y | Distanz von $K11_y$ zu $K0_y$ | Nanometer | 0 | 32 |
| 4 | DK12X | Distanz von $K12_x$ zu $K11_x$ | Nanometer | 134.937.500 | 32 |
| 5 | DK13Y | Distanz von $K13_y$ zu $K11_y$ | Nanometer | 88.900.000 | 32 |
| 6 | DK21X | Distanz von $K21_x$ zu $K0_x$ | Nanometer | 0 | 32 |
| 7 | DK21Y | Distanz von $K21_y$ zu $K0_y$ | Nanometer | 0 | 32 |
| 8 | DK22X | Distanz von $K22_x$ zu $K21_x$ | Nanometer | 0 | 32 |

(fortgesetzt)

| Nr. | Name | Bedeutung | Einheit | Wart | Bits |
|---|---|---|---|---|---|
| 9 | DK23Y | Distanz von $K23_y$ zu $K21_y$ | Nanometer | 0 | 32 |
| 10 | N1X | Anzahl, der Felder in Bereich 1, x-Richtung | numerischer Wert | 1 | 32 |
| | N1Y | Anzahl der Felder in Bereich 1, y-Richtung | numerischer Wert | 1 | |
| | N2X | Anzahl der Felder in Bereich 2, x-Richtung | numerischer Wert | 0 | |
| | N2Y | Anzahl der Felder in Bereich 2, y-Richtung | numerischer Wert | 0 | |
| 11 | LPF1 | Zeilen pro Datenfeld in Bereich 1 | numerischer Wert | 6.800 | 32 |
| 12 | CPF1 | Spalten pro Datenfeld in Bereich 1 | numerischer Wert | 4.480 | 32 |
| 13 | GX1 | Distanzzeilen zum nächsten Feld (X) in Bereich 1 | numerischer Wert | 0 | 32 |
| | GY1 | Distanzspalten zum nächsten Feld (Y) in Bereich 1 | numerischer Wert | 0 | |
| 14 | LPF2 | Zeilen pro Datenfeld in Bereich 2 | numerischer Wert | 0 | 32 |
| 15 | CPF2 | Spalten pro Datenfeld in Bereich 2 | numerischer Wert | 0 | 32 |
| 16 | GX2 | Distanzzeilen zum nächsten Feld (X) in Bereich 2 | numerischer Wert | 0 | 32 |
| | GY2 | Distanzspalten zum nächsten Feld (Y) in Bereich 2 | numerischer Wert | 0 | |
| 17 | SP1 | Sektorgröße im Bereich 1 | Bytes | 560 | 32 |
| | SP2 | Sektorgröße im Bereich 2 | Bytes | 0 | |
| 18 | FAFN | Erste Feldnummer mit analogen Daten | numerischer Wert | 0 | 32 |
| | FUFN | Erste Feldnummer ohne Daten | numerischer Wert | 0 | |

Die Mikroform 2 mit den vorstehenden Werten für die einzelnen Parameter des Dateisystems weist nur einem Bereich auf.
Dieser sehr einfache Fall einer digitalen Mikroform 2 gemäß Figur 12 beinhaltet nur ein einziges Datenfeld D1 der Dimension

```
(LPF1 - GX1) x (CPF1 - GY1) = 6.800 x 4.480 Datenzellen
```

Die Datenzellen enthalten nicht nur Nutzdaten, sondern, wie in der Datenverarbeitung üblich und notwendig, auch weitere Daten, die Adressinformationen und Informationen zur Datensicherung (Fehlererkennung und Fehlerkorrektur) enthalten. Zu den Nutzdaten (UserData) gehören auch diejenigen Daten, die zur Generierung des Dateisystems erforderlich sind. In diesem Beispiel sei jeder Sektor wie folgt aufgebaut:

| | Sektor: 560 Bytes | | | | | | | |
|---|---|---|---|---|---|---|---|---|
| | Sync | Header | | User Data | EDC | Intermedi ate | P-Parity | Q-Parity |
| | | Sektoradrese | Modus | | | | | |
| Bytes | 12 | 3 | 1 | 256 | 4 | 8 | 172 | 104 |

Sync-Feld: immer aus der Bitfolge x00FFFFFFFFFFFFFFFFFFFF00 bestehend
Header-Feld: Eine Sektoradresse aus drei Bytes sowie ein Modus-Byte (x01)
User Data: Nutzdaten
EDC: Error Detection and Correction: Dieses Feld ist entsprechend ECMA-130 aufgebaut
Intermediate:aus der Bitfolge x000000000000 bestehend
P-Parity: entsprechend ECMA-130 Anhang A

(fortgesetzt)

| Q-Parity: | entsprechend ECMA-130 Anhang A |
|---|---|

Bei einer Sektorgröße von SP1 = 560 Bytes = 4.480 Bits ergibt sich dann pro Zeile eine Nutzdatenmenge von 256 Bytes.

Die Sektoren werden fortlaufend in X-Richtung und in steigender Feldzahl, im Ausführungsbeispiel nur 1 Feld, angeordnet. Somit ist eine eindeutige Zuordnung auf jedes einzelne gespeicherte Bit gegeben, was die Voraussetzung für die Implementierung eines Dateisystems (z. B. UDF) bildet.

Die Datendichte errechnet sich zu:

$$\text{max ( LPF1 / DK12X, CPF1 / DK12Y)} \sim 50,4 \text{ Pixel/mm} = 1.280 \text{ Pixel / Inch}$$

Dieser Wert ist bereits mit herkömmlichen optoelektronischen Abtasteinrichtungen (CCD) bzw. Lasern *zum Beschreiben der Mikroform* 2 zu erreichen.

Das Nutzdatenvolumen der so aufgebauten Mikroform 2 errechnet sich dann zu:

$$V_1 = N1X \times N1Y \times (LPF1 - GX1) \times 256 \text{ Bytes} =$$
$$1 \times 1 \times 6.800 \times 256 \text{ Bytes} =$$
$$1.740.800 \text{ Bytes} \sim 1.66 \text{ MB.}$$

Geschieht die Art der Speicherung der digitalen Daten nicht nur mittels binärer Werte, d. h. 0 = transparent, 1 = schwarz, wird also zur Kodierung z. B. eine Farbmatrix mit 32.768 Farbstufen verwendet (R, G und B mit jeweils 5 Bit Farbtiefe), beträgt die Nutzdaten-Speicherkapazität $V_2$ dieser Mikroform

$$V_2 = 15 \times V_1$$
$$= 26.112.000 \text{ Bytes} = 24,9 \text{ MB}$$

*(1 GB = 1.024 MB, 1 MB = 1.024 KB, 1 KB = 1.024 Bytes)*

Wird zur Speicherung der digitalen Daten eine Farbmatrix mit 16.777.216 Farbstufen verwendet (R, G und B mit jeweils 8 Bit Farbtiefe), beträgt die Nutzdaten-Speicherkapazität $V_3$ dieser Mikroform

$$V_3 = 24 \times V_1$$
$$= 41.779.200 \text{ Bytes} = 39,8 \text{ MB}$$

Diese Musterrechnungen zur Speicherkapazität veranschaulichen die hervorragende Eignung der Mikroform zur Langzeitarchivierung großer digitaler Datenbestände.

Mit dem heutigen Stand der Technik lassen sich auf Mikroformen Strukturen von 2 $\mu$m realisieren. Bei einer Fläche von 141 mm x 94 mm auf einem Mikrofiche ergibt sich daraus eine Anzahl von 3.313.500.000 Pixeln und eine Bruttokapazität von:

$$V_4 = 24 \times 3.313.500.000 \text{ Bits}$$
$$= 79.524.000.000 \text{ Bits}$$
$$= 9.940.500.000 \text{ Bytes}$$
$$= 9.480 \text{ MB}$$
$$= 9,26 \text{ GB}$$

**Patentansprüche**

1. Verfahren zumindest zum Lesen von auf einer Mikroform in Feldern gespeicherten analogen und/oder digitalen Daten mit einem Gerät für den Zugriff auf die Mikroform, das über eine Hardwareschnittstelle mit einer Datenverarbeitungsanlage verbunden wird, **dadurch gekennzeichnet, dass**

   - die auf der Mikroform (2) gespeicherten analogen und/oder digitalen Daten von einer Steuereinheit (7) des Gerätes (1) der Datenverarbeitungsanlage (PC) so repräsentiert werden, als handele es sich bei der Mikroform (2) um einen Wechseldatenträger, wobei

      - die Steuereinheit (7) für eine Mikroform mit ausschließlich analogen Daten ein einem Wechseldatenträger entsprechendes Dateisystem aus den durch vollständige Abtastung der Mikroform erfassten Informationen zur Anordnung und Anzahl der Felder mit analogen Daten generiert und in einem Speicher (RAM) der Steuereinheit (7) ablegt oder
      - die Steuereinheit (7) für eine Mikroform mit ausschließlich digitalen Daten oder für eine Mikroform mit digitalen und analogen Daten aus einem auf der Mikroform (2) identifizierbaren Formatfeld (F) sowie aus mindestens einem der Felder mit digitalen Daten Informationen zur Struktur und Art der Datenspeicherung ausliest und ein einem Wechseldatenträger entsprechendes Dateisystem aus diesen Informationen generiert und in einem Speicher (RAM) der Steuereinheit (7) ablegt oder
      - die Steuereinheit (7) für eine Mikroform mit ausschließlich analogen Daten aus einem auf der Mikroform (2) identifizierbaren Formatfeld (F) Informationen zur Anordnung und Anzahl der Felder mit analogen Daten ausliest und ein einem Wechseldatenträger entsprechendes Dateisystem aus diesen Informationen generiert und in einem Speicher (RAM) der Steuereinheit (7) ablegt.

2. Verfahren nach Anspruch 1, **dadurch gekennzeichnet, dass**

   - eine erste Abtastung der in dem Gerät (1) befindlichen Mikroform (2) zumindest in dem Bereich (A1) der Mikroform durchgeführt wird, in dem sich gegebenenfalls das Formatfeld (F) der Mikroform befindet,
   - sofern bei der Abtastung kein Formatfeld (F) gefunden wird, die Steuereinheit (7) davon ausgeht, dass es sich um eine Mikroform (2) mit ausschließlich analogen Daten handelt,

      - wobei bei einer Mikroform mit ausschließlich analogen Daten die Steuereinheit (7) das einem Wechseldatenträger entsprechende Dateisystem aus den durch vollständige Abtastung der Mikroform erfassten Informationen zur Anordnung und Anzahl der Felder mit analogen Daten generiert und in dem Speicher (RAM) der Steuereinheit (7) ablegt,

   - sofern bei der ersten Abtastung ein Formatfeld (F) gefunden wird, die Steuereinheit (7) davon ausgeht, dass es sich um eine Mikroform (2) mit ausschließlich digitalen Daten oder um eine Mikroform mit digitalen und analogen Daten oder eine Mikroform (2) mit ausschließlich analogen Daten handelt,
   - wobei bei einer Mikroform mit ausschließlich digitalen Daten oder einer Mikroform mit digitalen und analogen Daten die Steuereinheit (7) aus dem auf der Mikroform (2) identifizierbaren Formatfeld (F) sowie aus dem mindestens einen Feld mit digitalen Daten Informationen zur Struktur und Art der Datenspeicherung ausliest und das einem Wechseldatenträger entsprechende Dateisystem aus diesen Informationen generiert und in dem Speicher (RAM) der Steuereinheit ablegt und
   - wobei bei einer Mikroform mit ausschließlich anlogen Daten die Steuereinheit (7) aus dem auf der Mikroform (2) identifizierbaren Formatfeld (F) Informationen zur Anordnung und Anzahl der Felder der Datenspeicherung ausliest und das einem Wechseldatenträger entsprechende Dateisystem aus diesen Informationen generiert und in dem Speicher (RAM) der Steuereinheit ablegt.

3.  Verfahren nach Anspruch 1 oder 2, **dadurch gekennzeichnet, dass**

- die Steuereinheit (7) bei Eingang eines Lesebefehls von der Datenverarbeitungsanlage (PC) überprüft, ob sich die angeforderten Daten bereits im Speicher der Steuereinheit befinden,
- die Steuereinheit die angeforderten Daten an die Datenverarbeitungsanlage ausgibt, sofern sich die angeforderten Daten bereits im Speicher der Steuereinheit (7) befinden,
- die Steuereinheit (7) mit Hilfe des Dateisystems ermittelt, welche Felder (D,A) der Mikroform (2) zum Erfassen der angeforderten Daten erneut abgetastet werden müssen und die Abtastung der einzelnen Felder ausführt, sofern sich die angeforderten Daten nicht bereits im Speicher der Steuereinheit (7) befinden,
- dass die bei der erneuten Abtastung einzelner Felder erfassten analogen und /oder digitalen Daten einer Mikroform (2) in ein zum generierten Dateisystem konformes Daten-Format von der Steuereinheit (7) gewandelt und an die Datenverarbeitungsanlage (PC) ausgegeben werden.

4.  Verfahren nach einem der Ansprüche 1 bis 3, **dadurch gekennzeichnet, dass** die Steuereinheit (7) bei Eingang eines Schreibbefehls von der Datenverarbeitungsanlage (PC) überprüft, ob sich eine beschreibbare Mikroform in dem Gerät (1) befindet, und sofern dies der Fall ist, die von der Datenverarbeitungsanlage (PC) an das Gerät übertragenen Daten auf die Mikroform schreibt.

5.  Gerät für den Zugriff auf eine Mikroform mit in Feldern gespeicherten analogen und/oder digitalen Daten zur Durchführung des Verfahrens nach einem der Ansprüche 1 bis 4, **dadurch gekennzeichnet, dass**

- das Gerät (1) eine Vorrichtung (3) zum Einziehen und Ausgeben der Mikroform (2) in einen Aufnahmeschacht (4) aufweist,
- das Gerät (1) zumindest eine Abtasteinrichtung zur Durchführung der Abtastung der in dem Gerät befindlichen Mikroform (2) aufweist, die mindestens eine auf einer Seite der Mikroform angeordnete elektromagnetische Strahlungsquelle (9) und mindestens einen elektronischen Sensor (10) auf der gegenüberliegenden Seite der Mikroform (2) umfasst, der die unterschiedliche Durchlässigkeit des Mikroplanfilms der Mikroform für die elektromagnetische Strahlung in elektrische Signale umwandelt und
- das Gerät (1) eine programmgesteuerte Steuereinheit (7) aufweist, die die auf der Mikroform (2) gespeicherten und mit der Abtasteinrichtung erfassbaren analogen und/oder digitalen Daten einer an das Gerät (1) angeschlossenen Datenverarbeitungsanlage (PC) so repräsentiert, als handele es sich bei der in den Aufnahmeschacht (4) einziehbaren Mikroform (2) um einen Wechseldatenträger.

6.  Gerät nach Anspruch 5, **dadurch gekennzeichnet, dass** das Gerät (1) eine von der Steuereinheit (7) gesteuerte Schreibeinrichtung zum Beschreiben des Filmmaterials der in den Aufnahmeschacht (4) einziehbaren Mikroform (2) aufweist.

7.  Gerät nach einem der Ansprüche 5 oder 6, **dadurch gekennzeichnet, dass** die Steuereinheit (7) einen Mikrocontroller mit Zentraleinheit (CPU), einen Festwertspeicher (ROM), einen Arbeitsspeicher (RAM), der zugleich als Speicher für die von der Mikroform einzulesenden Daten und das Dateisystem dient, einen nichtflüchtigen, wiederbeschreibbaren Speicher (NVRAM) für das Steuerprogramm der Steuereinheit sowie Peripheriekomponenten

- zum Einlesen (CCD) der Sensorsignale der Abtasteinrichtung, deren Zuordnung zur jeweiligen Leseposition und Speicherung im Arbeitsspeicher,
- zum Steuern der Helligkeit (LED) der mindestens einen elektromagnetischen Strahlungsquelle,
- zum Steuern der Vorrichtung (I/O) zum Einziehen und Ausgeben der Mikroform sowie des Bewegungsantriebs der Abtasteinrichtung sowie
- in der Ausführung nach Anspruch 6 zum Steuern der Schreibeinrichtung (LASER) aufweist.

8.  Mikroform umfassend einen Mikroplanfilm zur Verwendung in einem Verfahren nach einem der Ansprüche 1 bis 4, wobei der Mikroplanfilm ein von einer Abtasteinrichtung identifizierbares Formatfeld (F) und Felder (D,A) zur Speicherung digitaler und/oder analoger Daten aufweist, wobei das Formatfeld Informationen zur Struktur und Art der Datenspeicherung aufweist, wobei

- sowohl das Formatfeld (F) als auch die bereichsweise in Form und Größe übereinstimmenden Felder (D,A) zur Speicherung von digitalen und/oder analogen Daten in einem Rasterfeld in Reihen und Spalten angeordnet sind, und

- das Rasterfeld sowohl in Reihen oder Spalten hintereinander angeordnete Felder (D,A) zur Speicherung digitaler als auch in Reihen oder Spalten hintereinander angeordnete Felder zur Speicherung analoger Daten aufweist, **dadurch gekennzeichnet, dass**

- das Formatfeld (F) Strukturinforinationen zumindest zur Lage der einzelnen Felder auf der Mikroform (2), zur Anzahl der Felder (D,A), zur Anzahl der Spalten und Reihen (C, R) von Datenzellen jedes Feldes (D) zur Speicherung digitaler Daten, zur Anordnung des ersten Feldes (A1) mit analogen Daten sowie zur Größe der in den Feldern zur Speicherung digitaler Daten adressierbaren Datenblöcke aufweist.

9. Mikroform nach Anspruch 8, **dadurch gekennzeichnet, dass** das Formatfeld (F) in der linken oberen Ecke (A1) des Rasterfeldes angeordnet ist.

**Claims**

1. A method for reading at least analogue and/or digital data stored in fields on a microform by means of a device for accessing the microform which is connected to a data processing system via a hardware interface, the method **characterised in that**

- the analogue and/or digital data stored on the microform (2) is represented by a control unit (7) of the device (1) of the data processing system (PC) as if the microform (2) were a removable data storage medium wherein

- the control unit (7) for a microform containing exclusively analogue data generates a file system corresponding to a removable data storage medium from the information on the arrangement and number of fields containing analogue data acquired by a complete scan of the microform and stores the file system in a memory (RAM) of the control unit (7) or
- the control unit (7) for a microform containing exclusively digital data and or for a microform containing digital and analogue data reads information on the structure and type of data storage from a format field (F) identifiable on the microform (2) and from at least one of the fields containing digital data and generates from this information a file system corresponding to a removable data storage medium and stores the file system in a memory (RAM) of the control unit (7) or
- the control unit (7) for a microform containing exclusively analogue data reads information on the arrangement and number of fields containing analogue data from a format field (F) identifiable on the microform (2) and from at least one of the fields containing digital data and generates from this information a file system corresponding to a removable data storage medium and stores the file system in a memory (RAM) of the control unit (7).

2. The method according to claim 1, **characterised in that**

- a first scan of the microform (2) present in the device (2) is conducted at least in the region (A1) of the microform in which the format field (F) of the microform is optionally located,
- if no format field (F) is found during the scan, the control unit (7) assumes that the microform (2) contains exclusively analogue data,

- wherein when the microform contains exclusively analogue data, the control unit (7) generates the file system corresponding to a removable data storage medium from the information on the arrangement and number of fields containing analogue data acquired by a complete scan of the microform and stores the file system in the memory (RAM) of the control unit (7),

- if a format field (F) is found during the first scan, the control unit (7) assumes that this is a microform (2) containing exclusively digital data, or a microform containing digital and analogue data, or a microform (2) containing exclusively analogue data,
- wherein in the case of a microform containing exclusively digital data or a microform containing digital and analogue data, the control unit (7) reads information on the structure and type of data storage from at least one format field (F) identifiable on the microform (2) and from the at least one fields containing digital data and generates from this information a file system corresponding to a removable data storage medium, and stores the file system in the memory (RAM) of the control unit and
- wherein when a microform contains exclusively analogue data, the control unit (7) reads information on the arrangement and number of fields of the data storage system from a format field (F) identifiable on the microform (2) and generates from this information the file system corresponding to a removable data storage medium and stores the file system in the memory (RAM) of the control unit.

3. The method according to claim 1 or 2, **characterised in that**

- upon receipt of a read command from the data processing system (PC), the control unit (7) checks whether the requested data are already in the memory of the control unit,
- if the requested data are already in the memory of the control unit (7), the control unit sends the requested data to the data processing system,
- if the requested data are not already in the memory of the control unit (7), the control unit (7) determines with the aid of the file system which fields (D, A) of the microform (2) must be scanned again to acquire the requested data and executes a scan of the individual fields
- the analogue and/or digital data of a microform (2) acquired during the renewed scan of individual fields is converted by the control unit (7) into a data format conforming to the generated file system and is output to the data processing system (PC).

4. The method according to any one of claims 1 to 3, **characterised in that** upon receipt of a write command from the data processing system (PC), the control unit (7) checks whether a writable microform is present in the device (1), and if this is the case, writes the data transferred from the data processing system (PC) to the device onto the microform.

5. A device for accessing a microform having analogue and/or digital data stored in fields for carrying out the method according to any one of claims 1 to 4, **characterised in that**

- the device (1) comprises a device (3) for drawing the microform into and ejecting the microform (2) from a receiving slot (4),
- the device (1) comprises at least one scanning unit for scanning the microform (2) located in the device, the scanning unit comprising at least one electromagnetic radiation source (9) arranged on one side of the microform and at least one electronic sensor (10) on the opposing side (2) of the microform, which at least one electronic sensor converts the different degrees of transparency of the microfiche film of the microform to the electromagnetic radiation into electrical signals and
- the device (1) comprises a program-controlled control unit (7) which represents the analogue and/or digital data of a data processing system (PC) connected to the device (1), which is stored on the microform (2) and acquired by the scanning unit as if the microform (2) which can be drawn into the receiving slot (4) comprises a removable data storage medium.

6. The device according to claim 5, **characterised in that** the device (1) comprises a writing unit controlled by the control unit (7) for writing the film material of the microform (2) which can be drawn into the receiving slot (4).

7. The device according to any one of claims 5 or 6, **characterised in that** the control unit (7) comprises a microcontroller with a central unit (CPU), a read-only memory (ROM), a working memory (RAM), which simultaneously serves as a memory for the data to be read in from the microform and for the file system, a non-volatile, rewritable memory (NVRAM) for the control program of the control unit and peripheral components

- for reading (CCD) the sensor signals of the scanning unit, for assigning the sensor signals to an associated reading location, and for storing the sensor signals in the working memory,
- for controlling the brightness (LED) of the at least one electromagnetic radiation source,
- for controlling the unit (I/O) for drawing in and ejecting the microform and the movement drive of the scanning unit and
- in the embodiment according to claim 6 for controlling the writing device (LASER).

8. A microform comprising a microfiche film for use in a method according to any one of claims 1 to 4, wherein the microfiche film comprises a format field (F) identifiable by a scanning unit and fields (D, A) for the storage of digital and/or analogue data, wherein the format field comprises information on the structure and type of data storage, wherein

- both the format field (F) and the fields (D, A) for the storage of digital and/or analogue data, which have the same shape and size in certain areas, are arranged in rows and columns in a grid field and

- wherein the grid field comprises the data-storage fields (D, A) arranged in series in rows or columns for the storage of digital data and fields arranged in series in rows or columns for the storage of analogue data, **characterised in that**

- the format field (F) comprises structure information pertaining at least to the position of the individual fields on the microform (2), to the number of data-storage fields (D, A), to the number of columns and rows (C, R) of data cells of each field (D) for the storage of digital data, to the arrangement of the first field (A1) with analogue data, and to the size of the data blocks which can be addressed in the fields for the storage of digital data.

9. The microform according to claim 8, **characterised in that** the format field (F) is located in the upper left corner (A1) of the grid field.


**Revendications**

1. Procédé destiné au moins à la lecture de données analogiques et/ou numériques mémorisées sur une microforme dans des champs au moyen d'un appareil pour l'accès à une microforme, qui est lié via une interface matérielle à un système de traitement de données, **caractérisé en ce que**

   - les données analogiques et/ou numériques mémorisées sur la microforme (2) sont représentées par une unité de commande (7) de l'appareil (1) du système de traitement de données (PC) comme s'il s'agissait, pour la microforme (2), d'un support de données amovible,

      - l'unité de commande (7) générant pour une microforme avec des données exclusivement analogiques un système de fichier correspondant à un support de données amovible à partir des informations enregistrées par un balayage complet de la microforme pour l'agencement et le nombre des champs avec des données analogiques et le déposant dans une mémoire (RAM) de l'unité de commande (7) ou bien
      - l'unité de commande (7) lisant des informations concernant la structure et la nature de la mise en mémoire pour une microforme avec des données exclusivement numériques ou pour une microforme avec des données numériques et analogiques provenant d'un champ de format (F) identifiable sur la microforme (2) et d'au moins l'un des champs avec des données numériques et générant un système de fichier correspondant à un support de données amovible à partir de ces informations et le déposant dans une mémoire (RAM) de l'unité de commande (7) ou bien

   - l'unité de commande (7) lisant des informations concernant l'agencement et le nombre des champs avec des données analogiques pour une microforme avec des données exclusivement analogiques provenant d'un champ de format (F) identifiable sur la microforme (2), générant un système de fichier correspondant à un support de données amovible à partir de ces informations et le déposant dans une mémoire (RAM) de l'unité de commande (7).

2. Procédé selon la revendication 1, **caractérisé en ce**

   - **qu'**un premier balayage de la microforme (2) se trouvant dans l'appareil (1) est effectué au moins dans la zone (A1) de la microforme, dans laquelle se trouve éventuellement le champ de format (F) de la microforme,
   - si aucun champ de format (F) n'est trouvé lors du balayage, l'unité de commande (7) suppose qu'il s'agit d'une microforme (2) avec des données exclusivement analogiques,

      - sachant que, dans le cas d'une microforme avec des données exclusivement analogiques, l'unité de commande (7) génère le système de fichier correspondant à un support de données amovible à partir des informations enregistrées par le balayage complet de la microforme et concernant l'agencement et le nombre des champs avec des données analogiques et le dépose dans la mémoire (RAM) de l'unité de commande (7),

      - si un champ de format (F) est trouvé lors du premier balayage, l'unité de commande (7) suppose qu'il s'agit d'une microforme (2) avec des données exclusivement numériques ou d'une microforme avec des données numériques et analogiques ou d'une microforme (2) avec des données exclusivement analogiques,
      - l'unité de commande (7) lisant des informations concernant la structure et la nature de la mise en mémoire, dans le cas d'une microforme avec des données exclusivement numériques ou une microforme avec des données numériques, et analogiques, à partir du champ de format (F) identifiable sur la microforme (2) et à partir du au moins un champ avec des données numériques, générant le système de fichier correspondant à un support de données amovible et le déposant dans la mémoire (RAM) de l'unité de commande et

- sachant que, dans le cas d'une microforme avec des données exclusivement analogiques, l'unité de commande (7) lit des informations concernant l'agencement et le nombre des champs de la mise en mémoire à partir du champ de format (F) identifiable sur la microforme (2), génère le système de fichier correspondant à un support de données amovible et le dépose dans la mémoire (RAM) de l'unité de commande.

3. Procédé selon la revendication 1 ou 2, **caractérisé en ce que**

- l'unité de commande (7) vérifie en cas d'entrée d'une instruction de lecture provenant du système de traitement de données (PC) si les données demandées se trouvent déjà dans la mémoire de l'unité de commande,
- l'unité de commande envoie les données demandées au système de traitement de données dans la mesure où les données demandées se trouvent déjà dans la mémoire de l'unité de commande (7),
- l'unité de commande (7) détermine à l'aide du système de fichier quels champs (D, A) de la microforme (2) doivent être balayés à nouveau pour l'enregistrement des données demandées et exécute le balayage des différents champs dans la mesure où les données demandées ne se trouvent pas déjà dans la mémoire de l'unité de commande (7),
- **en ce que** les données analogiques et/ou numériques, enregistrées lors du nouveau balayage de champs individuels, d'une microforme (2) sont converties dans un format de données conforme au système de fichier généré par l'unité de commande (7) et sont envoyées au système de traitement de données (PC).

4. Procédé selon l'une quelconque des revendications 1 à 3, **caractérisé en ce que** l'unité de commande (7) vérifie lors de l'entrée d'une instruction d'écriture provenant du système de traitement de données (PC) si une microforme inscriptible se trouve dans l'appareil (1), et, si c'est le cas, enregistre les données transmises du système de traitement de données (PC) à l'appareil sur la microforme.

5. Appareil pour l'accès à une microforme avec des données analogiques et/ou numériques mémorisées dans des champs pour la mise en oeuvre du procédé selon l'une quelconque des revendications 1 à 4, **caractérisé en ce que**

- l'appareil (1) présente un dispositif (3) pour l'entrée et la sortie de la microforme (2) dans un puits de logement (4),
- l'appareil (1) présente au moins un dispositif de balayage pour la mise en oeuvre du balayage de la microforme (2) se trouvant dans l'appareil, qui comprend au moins une source de rayonnement (9) électromagnétique disposée sur un côté de la microforme et au moins un capteur (10) électronique sur le côté opposé de la microforme (2), qui convertit la perméabilité différente de la feuille de microfilm de la microforme pour le rayonnement électromagnétique en signaux électriques et
- l'appareil (1) présente une unité de commande (7) commandée par programme, qui représente les données analogiques et/ou numériques, mémorisées sur la microforme (2) et pouvant être enregistrées avec le dispositif de balayage, d'un système de traitement de données (PC) raccordé à l'appareil (1), comme s'il s'agissait d'un support de données amovible pour la microforme (2) pouvant être entrée dans le puits de logement (4).

6. Appareil selon la revendication 5, **caractérisé en ce que** l'appareil (1) présente un dispositif d'écriture contrôlé par l'unité de commande (7) pour l'écriture du matériau de film de la microforme (2) pouvant être entrée dans le puits de logement (4).

7. Appareil selon l'une quelconque des revendications 5 ou 6, **caractérisé en ce que** l'unité de commande (7) présente un microcontrôleur avec unité centrale (CPU), une mémoire morte (ROM), une mémoire de travail (RAM), qui sert en même temps de mémoire pour les données à entrer par la microforme et le système de fichier, une mémoire non volatile et réinscriptible (NVRAM) pour le programme de commande de l'unité de commande ainsi que des composants périphériques

- pour l'introduction (CCD) des signaux de capteur du dispositif de balayage, leur attribution à la position de lecture respective et leur stockage dans la mémoire de travail,
- pour la commande de la luminosité (LED) de la au moins une source de rayonnement électromagnétique,
- pour la commande du dispositif (I/O) pour l'entrée et la sortie de la microforme et de l'entraînement de déplacement du dispositif de balayage ainsi que
- dans la version selon la revendication 6 pour la commande du dispositif d'écriture (LASER).

8. Microforme comprenant une feuille de microfilm pour l'utilisation dans un procédé selon l'une quelconque des revendications 1 à 4, la feuille de microfilm présentant un champ de format (F) identifiable par un dispositif de balayage et des champs (D, A) pour la mémorisation de données numériques et/ou analogiques, le champ de format présentant des informations concernant la structure et la nature de la mise en mémoire,

   - aussi bien le champ de format (F) que les champs (D, A) coïncidant par zones dans la forme et la grandeur pour la mise en mémoire de données numériques et/ou analogiques étant disposés dans un champ de trame en rangées et colonnes, et
   - le champ de trame présentant aussi bien des champs (D, A) disposés en rangées ou colonnes les uns derrière les autres pour la mise en mémoire de données numériques que des champs disposés également en rangées ou colonnes les uns derrière les autres pour la mise en mémoire de données analogiques, **caractérisée en ce que**
   - le champ de format (F) présente des informations de structure au moins concernant la position des champs individuels sur la microforme (2), le nombre des champs (D, A), le nombre des colonnes et rangées (C, R) de cellules de données de chaque champ (D) pour la mise en mémoire de données numériques, l'agencement du premier champ (A1) avec des données analogiques et la grandeur des blocs de données adressables dans les champs pour la mise en mémoire de données numériques.

9. Microforme selon la revendication 8, **caractérisée en ce que** le champ de format (F) est disposé dans l'angle supérieur gauche (A1) du champ de trame.

Figur 1a

Figur 1b

Figur 2

Figur 3

Figur 4

## Figur 5

```
                    ┌─────────────────┐
                    │   Start Proc1   │
                    └────────┬────────┘
                             │   ┌──────────────┐
                             ▼   │              │
                          ╱─────────╲           │
                         ╱  S1       ╲   Nein    │
                        ╱  betätigt?  ╲──────────┘
                         ╲           ╱
                          ╲─────────╱
                             │ Ja
                    ┌────────┴────────┐
                    │ Aktiviere M1 und M2 │
                    └────────┬────────┘
                             │   ┌──────────────┐
                             ▼   │              │
                          ╱─────────╲           │
                         ╱  S2       ╲   Nein    │
                        ╱  betätigt?  ╲──────────┘
                         ╲           ╱
                          ╲─────────╱
                             │ Ja
                    ┌────────┴────────┐
                    │  Deaktiviere M2 │
                    └────────┬────────┘
                    ┌────────┴────────┐
                    │  Suche Formatfeld │
                    └────────┬────────┘
                          ╱─────────╲
                Nein     ╱  Formatfeld  ╲   Ja
          ┌─────────────╱  gefunden?    ╲────────────┐
          │             ╲               ╱            │
          │              ╲─────────────╱             │
          │                                          │
  ┌───────┴──────────┐                               │
  │ Taste gesamte    │                               │
  │ Mikroform        │                               │
  │ in geringer      │                               │
  │ Auflösung ab     │                               │
  │ und speichere    │                               │
  │ Ergebnis im RAM  │                               │
  └───────┬──────────┘                               │
  ┌───────┴──────────┐                     ┌─────────┴────────────┐
  │ Berechne         │                     │ Lese Formatfeld-     │
  │ Dateisystem      │                     │ Parameter            │
  └───────┬──────────┘                     └─────────┬────────────┘
  ╭───────┴──────────╮                     ╭─────────┴────────────╮
  │ Weiter mit Proc2 │                     │   Weiter mit Proc2   │
  ╰──────────────────╯                     ╰──────────────────────╯
```

Figur 6

Start Proc3

Beende Proc1 bzw. Proc2,
bewege M2 in Pos. A
und deaktiviere M1

Gehe zu Proc1

**Figur 7**

Figur 8

Figur 9

Figur 10

Figur 11

**Figur 12**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1684199 A2
- DE 4000671 A1
- US 4213040 A
- US 2007103739 A1
- WO 0028726 A